(19)

Europäisches
Patentamt
European
Patent Office
Office européen
des brevets

(11) **EP 4 564 230 A1**

(12) **EUROPEAN PATENT APPLICATION**
published in accordance with Art. 153(4) EPC

(43) Date of publication:
**04.06.2025 Bulletin 2025/23**

(21) Application number: **23851305.5**

(22) Date of filing: **18.05.2023**

(51) International Patent Classification (IPC):
*G06N 3/08* (2023.01)        *G06N 3/04* (2023.01)
*G06T 9/00* (2006.01)

(52) Cooperative Patent Classification (CPC):
**G06N 3/04; G06N 3/045; G06N 3/0475; G06N 3/08;
G06N 3/094; G06T 9/00**

(86) International application number:
**PCT/CN2023/095130**

(87) International publication number:
**WO 2024/032075 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022 CN 202210945704**

(71) Applicant: **Huawei Technologies Co., Ltd.
Shenzhen, Guangdong 518129 (CN)**

(72) Inventors:
• **LI, Meng
  Shenzhen, Guangdong 518129 (CN)**
• **WANG, Jing
  Shenzhen, Guangdong 518129 (CN)**
• **SHI, Yibo
  Shenzhen, Guangdong 518129 (CN)**

(74) Representative: **Maiwald GmbH
Engineering
Elisenhof
Elisenstrasse 3
80335 München (DE)**

(54) **TRAINING METHOD FOR IMAGE PROCESSING NETWORK, AND CODING METHOD, DECODING METHOD, AND ELECTRONIC DEVICE**

(57)    Embodiments of this application provide a method for training an image processing network, an encoding method, a decoding method, and an electronic device. The training method includes: obtaining a first training image and a first predicted image, and obtaining a period of checkerboard effect, where the first predicted image is generated by performing image processing on the first training image based on the image processing network; dividing the first training image into M first image blocks, and dividing the first predicted image into M second image blocks, based on the period, where both a size of the first image block and a size of the second image block are related to the period; determining a first loss based on the M first image blocks and the M second image blocks; and then training the image processing network based on the first loss. After the image processing network is trained based on the training method in this application, checkerboard effect in an image obtained through processing performed by using a trained image processing network can be eliminated to some extent, and visual quality of the image obtained through processing performed by using the trained image processing network can be improved.

FIG. 2a

**Description**

This application claims priority to Chinese Patent Application No. 202210945704.0, filed with the China National Intellectual Property Administration on August 8, 2022 and entitled "METHOD FOR TRAINING IMAGE PROCESSING NETWORK, ENCODING METHOD, DECODING METHOD, AND ELECTRONIC DEVICE", which is incorporated herein by reference in its entirety.

**TECHNICAL FIELD**

Embodiments of this application relate to the image processing field, and in particular, to a method for training an image processing network, an encoding method, a decoding method, and an electronic device.

**BACKGROUND**

Deep learning is also applied to various image processing tasks, such as image compression, image restoration, and image super-resolution, based on performance of deep learning far better than a conventional image algorithm in many fields such as image recognition and target detection.

Usually, in many image processing scenarios (for example, image compression, image restoration, and image super-resolution), checkerboard effect appears on an image obtained through processing performed by using a deep learning network. In other words, a grid very similar to a checkerboard appears in a partial area or an entire area of an obtained image, thereby greatly reducing visual quality of the image obtained through image processing.

**SUMMARY**

This application provides a method for training an image processing network, an encoding method, a decoding method, and an electronic device. After an image processing network is trained based on the training method, checkerboard effect in an image obtained through processing performed by using a trained image processing network can be eliminated to some extent.

According to a first aspect, an embodiment of this application provides a method for training an image processing network. The method includes: first, obtaining a first training image and a first predicted image, and obtaining a period of checkerboard effect, where the first predicted image is generated by performing image processing on the first training image based on the image processing network; dividing the first training image into M first image blocks, and dividing the first predicted image into M second image blocks, based on the period, where both a size of the first image block and a size of the second image block are related to the period, and M is an integer greater than 1; determining a first loss based on the M first image blocks and the M second image blocks; and then training the image processing network based on the first loss.

Because the checkerboard effect is periodic, in this application, the images before and after processing performed by using the image processing network (the first training image is an image before processing performed by using the image processing network, and the first predicted image is an image after processing performed by using the image processing network) are divided into image blocks based on the period of the checkerboard effect. Then, the loss is calculated through comparing differences between the image blocks before and after processing performed by using the image processing network (the M first image blocks are image blocks before processing performed by using the image processing network, and the M second image blocks are image blocks after processing performed by using the image processing network). The image processing network is trained based on the loss, to effectively compensate for each image block processed by using the image processing network, thereby reducing a difference between each first image block and a corresponding second image block. Both the size of the first image block and the size of the second image block are related to the period of the checkerboard effect. As the difference between each first image block and the corresponding second image block decreases, the checkerboard effect in each period is also eliminated to some extent. In this way, after the image processing network is trained based on the training method in this application, the checkerboard effect in an image obtained through processing performed by using a trained image processing network can be eliminated to some extent, thereby improving visual quality of the image obtained through processing performed by using the trained image processing network.

For example, the checkerboard effect is periodic noise (Periodic Noise) (the periodic noise is noise related to a spatial domain and a specific frequency) on the image, and the period of the checkerboard effect is a period of the noise.

For example, the period of the checkerboard effect is a two-dimensional period (the checkerboard effect is a phenomenon that a grid very similar to a checkerboard appears in a partial area or an entire area of an image, that is, the checkerboard effect is two-dimensional, where the two-dimensional period means that the period of the checkerboard effect includes values of two dimensions, and the two dimensions correspond to a length and a width of the image). A quantity of periods of the checkerboard effect is M.

For example, a shape of the period of the checkerboard effect may be rectangular, and a size of the period of the checkerboard effect may be represented by p*q, where p and q are positive integers, units of p and q are px (pixel), p and q may be equal or may be unequal. This is not limited in this application.

It should be understood that the period of the checkerboard effect may alternatively be another shape (for example, triangular, oval, or an irregular shape). This is not limited in this application.

For example, the first loss is used to compensate for the checkerboard effect of the image.

For example, sizes of the M first image blocks may be the same or may be different. This is not limited in this application.

For example, sizes of the M second image blocks may be the same or may be different. This is not limited in this application.

For example, the sizes of the first image block and the second image block may be the same or may be different. This is not limited in this application.

For example, both the size of the first image block and the size of the second image block being related to the period may indicate that the size of the first image block and the size of the second image block are determined based on the period of the checkerboard effect. For example, both the size of the first image block and the size of the second image block may be greater than, less than, or equal to the period of the checkerboard effect.

For example, the image processing network may be applied to image super-resolution. Image super-resolution is to restore a low-resolution image or video to a high-resolution image or video.

For example, the image processing network may be applied to image restoration. Image restoration is to restore an image or a video with a blurred partial area to an image or a video with clear details in the partial area.

For example, the image processing network may be applied to image encoding and decoding.

For example, when the image processing network is applied to image encoding and decoding, a bit rate point at which the checkerboard effect appears may be reduced. In other words, compared with the conventional technologies, a bit rate point at which the checkerboard effect appears is lower in an image obtained through encoding and decoding performed by using the image processing network trained according to the training method in this application. In addition, in a case of a medium bit rate (for example, the bit rate may be between 0.15 Bpp (Bits per pixel, bits per pixel) and 0.3 Bpp, and may be specifically set according to a requirement), an image obtained through encoding and decoding performed by using the image processing network trained according to the training method in this application has higher quality.

For example, when the image processing network includes an upsampling layer, the period of the checkerboard effect may be determined based on a quantity of upsampling layers.

With reference to the first aspect, the determining a first loss based on the M first image blocks and the M second image blocks includes: obtaining a first feature block based on the M first image blocks, where a characteristic value in the first feature block is obtained through calculation based on pixels at corresponding locations in the M first image blocks; obtaining a second feature block based on the M second image blocks, where a characteristic value in the second feature block is obtained through calculation based on pixels at corresponding locations in the M second image blocks; and determining the first loss based on the first feature block and the second feature block. In this way, information of the M first image blocks is summarized into one or more first feature blocks, and information of the M second image blocks is summarized into one or more second feature blocks. Then, the first loss is calculated through comparing the first feature block with the second feature block, to more targetedly compensate for the periodic checkerboard effect, thereby implementing better effect of eliminating the checkerboard effect.

It should be understood that a quantity of first feature blocks and a quantity of second feature blocks are not limited in this application.

With reference to the first aspect or any one of the implementations of the first aspect, the obtaining a first feature block based on the M first image blocks includes: obtaining the first feature block based on N first image blocks in the M first image blocks, where the characteristic value in the first feature block is obtained through calculation based on pixels at corresponding locations in the N first image blocks, and N is a positive integer less than or equal to M. The obtaining a second feature block based on the M second image blocks includes: obtaining the second feature block based on N second image blocks in the M second image blocks, where the characteristic value in the second feature block is obtained through calculation based on pixels at corresponding locations in the N second image blocks. In this way, calculation may be performed based on pixels at corresponding locations in some or all of the first image blocks to obtain the first feature block, and calculation may be performed based on pixels at corresponding locations in some or all of the second image blocks to obtain the second feature block. When the first feature block is obtained through calculation based on the pixels at the corresponding locations in some of the first image blocks and the second feature block is obtained through calculation based on the pixels at the corresponding locations in some of the second image blocks, less information is used for calculation of the first loss, thereby improving efficiency of calculating the first loss. When the first feature block is obtained through calculation based on the pixels at the corresponding locations in all the first image blocks and the second feature block is obtained through calculation based on the pixels at the corresponding locations in all the second image blocks, more comprehensive information is used for calculation of the first loss, thereby improving accuracy of the first loss.

With reference to the first aspect or any one of the implementations of the first aspect, the obtaining a first feature block based on the M first image blocks includes: performing calculation based on first target pixels at corresponding first locations in all first image blocks in the M first image blocks, to obtain a characteristic value of a corresponding first location in the first feature block, where a quantity of first target pixels is less than or equal to a total quantity of pixels included in the first image block, and one characteristic value is correspondingly obtained for first target pixels at same first locations in the M first image blocks. The obtaining a second feature block based on the M second image blocks includes: performing calculation based on second target pixels at corresponding second locations in all second image blocks in the M second image blocks, to obtain a characteristic value of a corresponding second location in the second feature block, where a quantity of second target pixels is less than or equal to a total quantity of pixels included in the second image block, and one characteristic value is correspondingly obtained for second target pixels at same second locations in the M second image blocks. In this way, the feature block (the first feature block/the second feature block) can be calculated based on some or all pixels in the image block (the first image block/the second image block). When calculation is performed based on some pixels in the image block, less information is used for calculating the first loss, thereby improving efficiency of calculating the first loss. When calculation is performed based on all pixels in the image block, more comprehensive information is used for calculating the first loss, thereby improving accuracy of the first loss.

For example, when N is less than M, the obtaining the first feature block based on N first image blocks in the M first image blocks may include: performing calculation based on first target pixels at corresponding first locations in all first image blocks in the N first image blocks, to obtain a characteristic value of a corresponding first location in the first feature block, where one characteristic value is correspondingly obtained for first target pixels at same first locations in the N first image blocks; and the obtaining the second feature block based on N second image blocks in the M second image blocks may include: performing calculation based on second target pixels at corresponding second locations in all second image blocks in the N second image blocks, to obtain a characteristic value of a corresponding second location in the second feature block, where one characteristic value is correspondingly obtained for second target pixels at same second locations in the N second image blocks.

With reference to the first aspect or any one of the implementations of the first aspect, the obtaining a first feature block based on the M first image blocks includes: determining a characteristic value of a corresponding location in the first feature block based on an average value of pixels at corresponding locations in all first image blocks in the M first image blocks, where one characteristic value is correspondingly obtained for an average value of pixels at same locations in the M first image blocks. The obtaining a second feature block based on the M second image blocks includes: determining a characteristic value of a corresponding location in the second feature block based on an average value of pixels at corresponding locations in all second image blocks in the M second image blocks, where one characteristic value is correspondingly obtained for an average value of pixels at same locations in the M second image blocks. In this way, the characteristic value of the feature block (the first feature block/the second feature block) is determined in a manner of calculating a pixel average value. Calculation is simple, thereby improving efficiency of calculating the first loss.

It should be noted that, in this application, in addition to the foregoing manner of calculating a pixel average value, another linear calculation manner (for example, linear weighting) may be used to perform calculation for the pixels to determine the characteristic value of the feature block. This is not limited in this application.

It should be noted that, in this application, calculation may be alternatively performed for the pixels in a non-linear calculation manner to determine the characteristic value of the feature block. For example, non-linear calculation may be performed according to the following formula:

$$F_i = A1 * e_{1i}^2 + A2 * e_{2i}^2 + A3 * e_{3i}^2 + ... + AM * e_{Mi}^2.$$

Herein, $F_i$ represents a characteristic value of an $i^{th}$ location in a first feature map. $e_{1i}$ represents a pixel at an $i^{th}$ location in a $1^{st}$ first image block; $e_{2i}$ represents a pixel at an $i^{th}$ location in a $2^{nd}$ first image block; $e_{3i}$ represents a pixel at an $i^{th}$ location in a $3^{rd}$ first image block; ...; and $e_{Mi}$ represents a pixel at an $i^{th}$ location in an $M^{th}$ first image block. A1 represents a weight coefficient corresponding to the pixel at the $i^{th}$ location in the $1^{st}$ first image block; A2 represents a weight coefficient corresponding to the pixel at the $i^{th}$ location in the $2^{nd}$ first image block; A3 represents a weight coefficient corresponding to the pixel at the $i^{th}$ location in the $3^{rd}$ first image block; ...; and AM represents a weight coefficient corresponding to the pixel at the $i^{th}$ location in the $M^{th}$ first image block, where i is an integer ranging from 1 to M (i may be equal to 1 or M).

It should be noted that, in this application, calculation may be performed for the pixels based on a convolutional layer, to determine the characteristic value of the feature block. For example, the M first image blocks may be input to the convolutional layer (one or more layers) and a fully connected layer, to obtain the first feature block output by the fully connected layer; and the M second image blocks may be input to the convolutional layer (one or more layers) and a fully connected layer, to obtain the second feature block output by the fully connected layer.

It should be understood that, in this application, another calculation manner may be alternatively used to perform calculation for the pixels to determine the characteristic value of the feature block. This is not limited in this application.

For example, when N is less than M, the obtaining the first feature block based on N first image blocks in the M first image blocks may include: determining a characteristic value of a corresponding location in the first feature block based on an average value of pixels at corresponding locations in all first image blocks in the N first image blocks, where one characteristic value is correspondingly obtained for an average value of pixels at same locations in the N first image blocks; and the obtaining the second feature block based on N second image blocks in the M second image blocks may include: determining a characteristic value of a corresponding location in the second feature block based on an average value of pixels at corresponding locations in all second image blocks in the N second image blocks, where one characteristic value is correspondingly obtained for an average value of pixels at same locations in the N second image blocks.

With reference to the first aspect or any one of the implementations of the first aspect, the determining the first loss based on the first feature block and the second feature block includes: determining the first loss based on a point-to-point loss between the first feature block and the second feature block.

For example, the point-to-point loss (that is, a point-based loss) may include an Ln distance (for example, an L1 distance (Manhattan distance), an L2 distance (Euclidean distance), or an L-Inf distance (Chebyshev distance)). This is not limited in this application.

With reference to the first aspect or any one of the implementations of the first aspect, the determining the first loss based on the first feature block and the second feature block includes: determining the first loss based on a feature-based loss between the first feature block and the second feature block.

For example, the feature-based loss (that is, a feature-based loss) may include an SSIM (Structural Similarity, structural similarity), an MSSSIM (Multi-Scale Structural Similarity, multi-scale structural similarity), and an LPIPS (Learned Perceptual Image Patch Similarity, learned perceptual image patch similarity). This is not limited in this application.

For example, the first feature block and the second feature block may be further input to a neural network (for example, a convolutional network or a VGG network (Visual Geometry Group Network, visual geometric group network)), and the neural network outputs a first feature of the first feature block and a second feature of the second feature block. Then, a distance between the first feature and the second feature is calculated, to obtain the feature-based loss.

With reference to the first aspect or any one of the implementations of the first aspect, the image processing network includes an encoding network and a decoding network. Before the obtaining a first training image and a first predicted image, the method further includes: obtaining a second training image and a second predicted image, where the second predicted image is obtained through encoding the second training image based on an untrained encoding network and then decoding an encoding result of the second training image based on an untrained decoding network; determining a second loss based on the second predicted image and the second training image; and pre-training the untrained encoding network and the untrained decoding network based on the second loss. In this way, through pre-training the image processing network, the image processing network can converge faster and better in a subsequent training process.

For example, a bit rate loss and a mean square error loss may be determined based on the second predicted image and the second training image; and then, the bit rate loss and the mean square error loss are weighted, to obtain the second loss.

The bit rate loss indicates a size of a bitstream. The mean square error loss may be a mean square error between the second predicted image and the second training image, and may be used to improve an objective indicator (for example, a PSNR (Peak Signal-to-Noise Ratio, peak signal-to-noise ratio)) of an image.

For example, weight coefficients respectively corresponding to the bit rate loss and the mean square error loss may be the same or may be different. This is not limited in this application.

According to the first aspect or any one of the implementations of the first aspect, the first predicted image is obtained through encoding the first training image based on a pre-trained encoding network and then decoding an encoding result of the first training image based on a pre-trained decoding network. The training the image processing network based on the first loss includes: determining a third loss based on discrimination results obtained by a discrimination network for the first training image and the first predicted image, where the third loss is a loss of a GAN (Generative Adversarial Network, generative adversarial network), and the GAN network includes the discrimination network and the decoding network; and training the pre-trained encoding network and the pre-trained decoding network based on the first loss and the third loss. In this way, with reference to the first loss and the third loss, compensation for the checkerboard effect can be better implemented, to eliminate the checkerboard effect to a greater extent.

For example, the decoding network includes an upsampling layer, and the period of the checkerboard effect may be determined based on the upsampling layer in the decoding network.

With reference to the first aspect or any one of the implementations of the first aspect, the training the image processing network based on the first loss further includes: determining a fourth loss, where the fourth loss includes at least one of the following: an L1 loss, a bit rate loss, a perceptual loss, and an edge loss. The training the pre-trained encoding network and the pre-trained decoding network based on the first loss and the third loss includes: training the pre-trained encoding network and the pre-trained decoding network based on the first loss, the third loss, and the fourth loss.

The L1 loss may be used to improve an objective indicator (for example, a PSNR (Peak Signal-to-Noise Ratio, peak signal-to-noise ratio)) of an image. The bit rate loss indicates a size of a bitstream. The perceptual loss may be used to improve visual effect of an image. The edge loss may be used to prevent edge distortion. In this way, by training the image processing network with reference to a plurality of losses, quality (including objective quality and subjective quality (which may also be referred to as visual quality)) of an image processed by the trained image processing network can be improved.

For example, weight coefficients respectively corresponding to the first loss, the third loss, the L1 loss, the bit rate loss, the perceptual loss, and the edge loss may be the same or may be different. This is not limited in this application.

With reference to the first aspect or any one of the implementations of the first aspect, the image processing network further includes a hyperprior encoding network and a hyperprior decoding network, and the hyperprior decoding network and the decoding network each includes an upsampling layer. The period includes a first period and a second period. The first period is determined based on a quantity of upsampling layers in the decoding network. The second period is determined based on the first period and a quantity of upsampling layers in the hyperprior decoding network. The second period is greater than the first period.

With reference to the first aspect or any one of the implementations of the first aspect, the dividing the first training image into M first image blocks, and dividing the first predicted image into M second image blocks, based on the period includes: dividing the first training image into the M first image blocks based on the first period and the second period, where the M first image blocks include M1 third image blocks and M2 fourth image blocks, a size of the third image block is related to the first period, a size of the fourth image block is related to the second period, M1 and M2 are positive integers, and M1+M2=M; and dividing the first predicted image into the M second image blocks based on the first period and the second period, where the M second image blocks include M1 fifth image blocks and M2 sixth image blocks, a size of the fifth image block is related to the first period, and a size of the sixth image block is related to the second period. When the first loss includes a fifth loss and a sixth loss, the determining a first loss based on the M first image blocks and the M second image blocks includes: determining the fifth loss based on the M1 third image blocks and the M1 fifth image blocks; and determining the sixth loss based on the M2 fourth image blocks and the M2 sixth image blocks.

With reference to the first aspect or any one of the implementations of the first aspect, the training the image processing network based on the first loss includes: performing weighting calculation on the fifth loss and the sixth loss to obtain a seventh loss; and training the pre-trained encoding network and the pre-trained decoding network based on the seventh loss.

When the image processing network includes the encoding network and the decoding network, and further includes the hyperprior encoding network and the hyperprior decoding network, because the hyperprior decoding network causes checkerboard effect with a longer period, a loss is determined after an image is divided into blocks at the longer period, to compensate for the checkerboard effect with the longer period. In this way, the checkerboard effect with the longer period is eliminated to some extent, thereby further improving image quality.

For example, weight coefficients respectively corresponding to the fifth loss and the sixth loss may be the same or may be different. This is not limited in this application.

For example, the weight coefficient corresponding to the fifth loss may be greater than the weight coefficient corresponding to the sixth loss.

It should be understood that the period of the checkerboard effect may further include more periods different from the first period and the second period. For example, the period of the checkerboard effect includes k periods (the k periods may be respectively the first period, the second period, ..., and a $k^{th}$ period, where k is an integer greater than 2). In this way, the first training image may be divided into the M first image blocks based on the first period, the second period, ..., and the $k^{th}$ period. The M first image blocks may include M1 image blocks 11, M2 image blocks 12, ..., and Mk image blocks 1k. A size of the image block 11 is related to the first period, a size of the image block 12 is related to the second period, ..., and a size of the image block 1k is related to the $k^{th}$ period, where M1+M2+...+Mk=M. The first predicted image may be divided into the M second image blocks based on the first period, the second period, ..., and the $k^{th}$ period. The M second image blocks may include M1 image blocks 21, M2 image blocks 22, ..., and Mk image blocks 2k. A size of the image block 21 is related to the first period, a size of the image block 22 is related to the second period, ..., and a size of the image block 2k is related to the $k^{th}$ period. Then, a loss (loss) 1 may be determined based on the M1 image blocks 11 and the M1 image blocks 21, a loss 2 may be determined based on the M2 image blocks 12 and the M2 image blocks 22, ..., and a loss k may be determined based on the Mk image blocks 1k and the Mk image blocks 2k. Afterward, the pre-trained encoding network and the pre-trained decoding network may be trained based on the loss 1, the loss 2, ..., and the loss k.

According to a second aspect, an embodiment of this application provides an encoding method. The method includes: obtaining a to-be-encoded image; then inputting the to-be-encoded image to an encoding network, and processing, by the encoding network, the to-be-encoded image to obtain a feature map output by the encoding network; and performing entropy encoding on the feature map to obtain a first bitstream. The encoding network is obtained through training performed by using the first aspect and any one of the implementations of the first aspect. Correspondingly, a decoder decodes the first bitstream by using the decoding network obtained through training performed by using the first aspect and any one of the implementations of the first aspect. Further, when it is ensured that checkerboard effect does not appear in a reconstructed image, a same image may be encoded at a bit rate in this application lower than that in the conventional technologies. In addition, when the same image is encoded by using the same bit rate (for example, a medium bit rate), encoding quality in this application is higher than that in the conventional technologies.

With reference to the second aspect, the performing entropy encoding on the feature map to obtain a first bitstream includes: inputting the feature map to a hyperprior encoding network, and processing, by the hyperprior encoding network, the feature map to obtain a hyperprior feature; inputting the hyperprior feature to a hyperprior decoding network, and processing, by the hyperprior decoding network, the hyperprior feature and then outputting probability distribution; and performing entropy encoding on the feature map based on the probability distribution to obtain the first bitstream. Both the hyperprior encoding network and the hyperprior decoding network are obtained through training performed by using the first aspect and any one of the implementations of the first aspect. A hyperprior encoding network and a hyperprior decoding network that are trained by using a training method in the conventional technologies introduce checkerboard effect with a greater period. In comparison, checkerboard effect with a greater period can be avoided on a reconstructed image in this application.

With reference to the second aspect or any one of the implementations of the second aspect, entropy encoding is performed on the hyperprior feature to obtain a second bitstream. In this way, after subsequently receiving the first bitstream and the second bitstream, the decoder may determine the probability distribution based on the hyperprior feature obtained by decoding the second bitstream, and then decode and reconstruct the first bitstream based on the probability distribution, to obtain a reconstructed image, to help the decoder perform decoding.

According to a third aspect, an embodiment of this application provides a decoding method. The decoding method includes: obtaining a first bitstream, where the first bitstream is a bitstream of a feature map; then, performing entropy decoding on the first bitstream to obtain the feature map; and inputting the feature map to a decoding network, and processing, by the decoding network, the feature map to obtain a reconstructed image output by the decoding network. The decoding network is obtained through training performed by using the first aspect and any one of the implementations of the first aspect. Correspondingly, the first bitstream is obtained through encoding performed by an encoder based on the encoding network obtained through training performed by using the first aspect and any one of the implementations of the first aspect. Further, when a bit rate of the first bitstream is lower than that in the conventional technologies, the checkerboard effect does not appear in the reconstructed image in this application. In addition, when the first bitstream is the same as that (for example, a medium bit rate) in the conventional technologies, quality of the reconstructed image in this application is higher.

According to a third aspect, the method further includes: obtaining a second bitstream, where the second bitstream is a bitstream of a hyperprior feature. The performing entropy decoding on the bitstream to obtain the feature map includes: performing entropy decoding on the second bitstream to obtain the hyperprior feature; inputting the hyperprior feature to a hyperprior decoding network, and processing, by the hyperprior decoding network, the hyperprior feature to obtain probability distribution; and performing entropy decoding on the first bitstream based on the probability distribution to obtain the feature map. In this way, the decoder can directly decode the bitstream to obtain the probability distribution without recalculation, thereby improving decoding efficiency. In addition, the hyperprior decoding network is obtained through training performed by using the first aspect and any one of the implementations of the first aspect. A hyperprior decoding network trained by using a training method in the conventional technologies introduces checkerboard effect with a greater period. In comparison, checkerboard effect with a greater period can be avoided on a reconstructed image in this application.

According to a fourth aspect, an embodiment of this application provides an electronic device, including a memory and a processor. The memory is coupled to the processor. The memory stores program instructions. When the program instructions are executed by the processor, the electronic device is enabled to perform the training method according to the first aspect or any one of the possible implementations of the first aspect.

The fourth aspect and any one of the implementations of the fourth aspect respectively correspond to the first aspect and any one of the implementations of the first aspect. For technical effects corresponding to the fourth aspect and any one of the implementations of the fourth aspect, refer to the technical effects corresponding to the first aspect and any one of the implementations of the first aspect. Details are not described herein again.

According to a fifth aspect, an embodiment of this application provides a chip, including one or more interface circuits and one or more processors. The interface circuit is configured to: receive a signal from a memory of an electronic device, and send the signal to the processor, where the signal includes computer instructions stored in the memory. When the processor executes the computer instructions, the electronic device is enabled to perform the training method according to the first aspect or any one of the possible implementations of the first aspect.

The fifth aspect and any one of the implementations of the fifth aspect respectively correspond to the first aspect and any one of the implementations of the first aspect. For technical effects corresponding to the fifth aspect and any one of the implementations of the fifth aspect, refer to the technical effects corresponding to the first aspect and any one of the implementations of the first aspect. Details are not described herein again.

According to a sixth aspect, an embodiment of this application provides a computer-readable storage medium. The computer-readable storage medium stores a computer program. When the computer program is run on a computer or a processor, the computer or the processor is enabled to perform the training method according to the first aspect or any one of the possible implementations of the first aspect.

The sixth aspect and any one of the implementations of the sixth aspect respectively correspond to the first aspect and any one of the implementations of the first aspect. For technical effects corresponding to the sixth aspect and any one of the implementations of the sixth aspect, refer to the technical effects corresponding to the first aspect and any one of the implementations of the first aspect. Details are not described herein again.

According to a seventh aspect, an embodiment of this application provides a computer program product. The computer program product includes a software program. When the software program is executed by a computer or a processor, the computer or the processor is enabled to perform the training method in the first aspect or any one of the possible implementations of the first aspect.

The seventh aspect and any one of the implementations of the seventh aspect respectively correspond to the first aspect and any one of the implementations of the first aspect. For technical effects corresponding to the seventh aspect and any one of the implementations of the seventh aspect, refer to the technical effects corresponding to the first aspect and any one of the implementations of the first aspect. Details are not described herein again.

According to an eighth aspect, an embodiment of this application provides a bitstream storage apparatus. The apparatus includes a receiver and at least one storage medium. The receiver is configured to receive a bitstream. The at least one storage medium is configured to store the bitstream. The bitstream is generated according to the second aspect and any one of the implementations of the second aspect.

The eighth aspect and any one of the implementations of the eighth aspect respectively correspond to the second aspect and any one of the implementations of the second aspect. For technical effects corresponding to the eighth aspect and any one of the implementations of the eighth aspect, refer to the technical effects corresponding to the second aspect and any one of the implementations of the second aspect. Details are not described herein again.

According to a ninth aspect, an embodiment of this application provides a bitstream transmission apparatus. The apparatus includes a transmitter and at least one storage medium. The at least one storage medium is configured to store a bitstream. The bitstream is generated according to the second aspect and any one of the implementations of the second aspect. The transmitter is configured to: obtain the bitstream from the storage medium, and send the bitstream to a terminal-side device by using a transmission medium.

The ninth aspect and any one of the implementations of the ninth aspect respectively correspond to the second aspect and any one of the implementations of the second aspect. For technical effects corresponding to the ninth aspect and any one of the implementations of the ninth aspect, refer to the technical effects corresponding to the second aspect and any one of the implementations of the second aspect. Details are not described herein again.

According to a tenth aspect, an embodiment of this application provides a bitstream distribution system. The system includes: at least one storage medium, configured to store at least one bitstream, where the at least one bitstream is generated according to the second aspect and any one of the implementations of the second aspect; and a streaming media device, configured to: obtain a target bitstream from the at least one storage medium, and send the target bitstream to a terminal-side device, where the streaming media device includes a content server or a content delivery server.

The tenth aspect and any one of the implementations of the tenth aspect respectively correspond to the second aspect and any one of the implementations of the second aspect. For technical effects corresponding to the tenth aspect and any one of the implementations of the tenth aspect, refer to the technical effects corresponding to the second aspect and any one of the implementations of the second aspect. Details are not described herein again.

## BRIEF DESCRIPTION OF DRAWINGS

FIG. 1a is a diagram of an example of an artificial intelligence main framework;
FIG. 1b is a diagram of an example of an application scenario;
FIG. 1c is a diagram of an example of an application scenario;
FIG. 1d is a diagram of an example of an application scenario;
FIG. 1e is a diagram of an example of checkerboard effect;
FIG. 2a is a diagram of an example of a training process;
FIG. 2b is a diagram of an example of a deconvolution process;
FIG. 3a is a diagram of an example of an end-to-end image compression framework;
FIG. 3b is a diagram of an example of an end-to-end image compression framework;

FIG. 3c(1) and FIG. 3c(2) are a diagram of an example of a network structure;

FIG. 4a is a diagram of an example of a training process;

FIG. 4b is a diagram of an example of a chunking process;

FIG. 4c is a diagram of an example of a process of generating a first feature block;

FIG. 5 is a diagram of an example of a training process;

FIG. 6 is a diagram of an example of an encoding process;

FIG. 7 is a diagram of an example of a decoding process;

FIG. 8a is a diagram of an example of an image quality comparison result;

FIG. 8b is a diagram of an example of an image quality comparison result;

FIG. 8c is a diagram of an example of an image quality comparison result; and

FIG. 9 is a diagram of an example of a structure of an apparatus.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In embodiments of this application, words such as "example" and "for example" are used to represent giving an example, an illustration, or a description. Any embodiment or design scheme described as an "example" or "for example" in embodiments of this application should not be explained as being more preferred or having more advantages than another embodiment or design scheme. To be precise, use of the words such as "example" and "for example" is intended to present a relative concept in a specific manner.

In descriptions of embodiments of this application, unless otherwise stated, "a plurality of" means two or more than two. For example, a plurality of processing units mean two or more processing units, and a plurality of systems mean two or more systems.

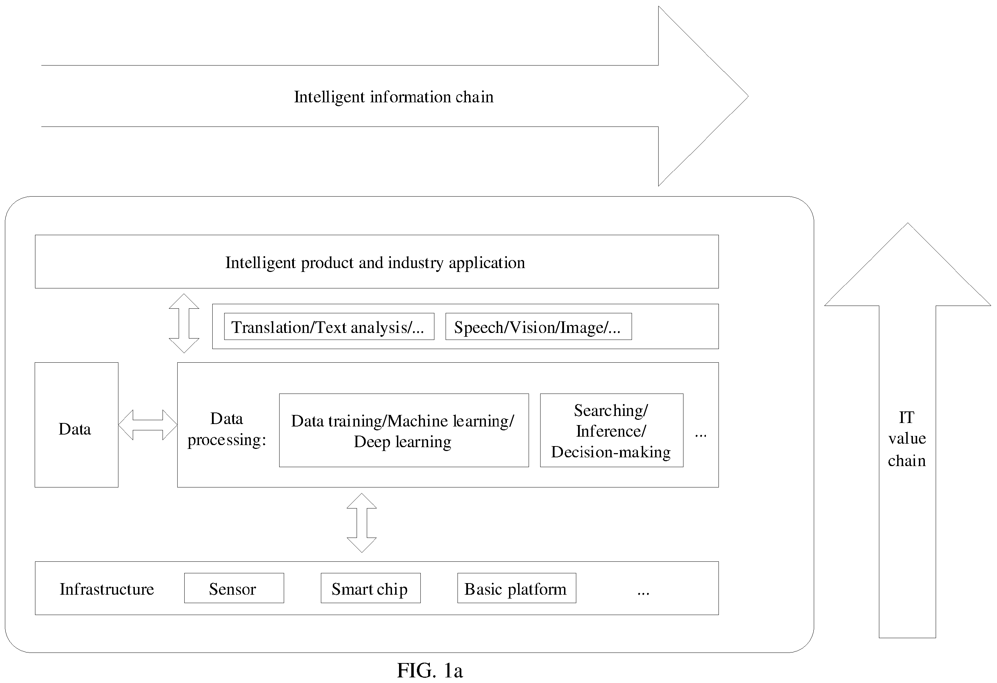

FIG. 1a is a diagram of an example of an artificial intelligence main framework. The main framework describes an overall working procedure of an artificial intelligence system, and is applicable to a requirement of a general artificial intelligence field.

The following describes the foregoing artificial intelligence main framework from two dimensions of an "intelligent information chain" (a horizontal axis) and an "IT value chain" (a vertical axis).

The "intelligent information chain" reflects a series of processes from data obtaining to data processing. For example, the process may be a general process of intelligent information perception, intelligent information representation and formation, intelligent inference, intelligent decision making, and intelligent execution and output. In this process, the data undergoes a refinement process of "data-information-knowledge-intelligence".

The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to Internet of things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formalized intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision making is a process of making a decision after intelligent information is inferred, and usually provides functions such as classification, ranking, and prediction.

(4) General capability

After data processing mentioned above is performed on data, some general capabilities may further be formed based on a data processing result, for example, an algorithm or a general system, such as translation, text analysis, computer vision processing, speech recognition, image recognition, and texture mapping generation.

(5) Intelligent product and industry application

The smart product and the industry application are a product and an application of the artificial intelligence system in various fields, and are package of an overall solution of artificial intelligence, so that decision-making for intelligent information is productized and an application is implemented. Application fields mainly include smart manufacturing, smart transportation, smart home, smart health care, smart security protection, autonomous driving, a smart terminal, and the like.

The image processing network in this application may be used to implement machine learning, deep learning, searching, inference, decision making, and the like. The image processing network mentioned in this application may include a plurality of types of neural networks, for example, a deep neural network (deep neural network, DNN), a convolutional neural network (convolutional neural network, CNN), a recurrent neural network (recurrent neural network, RNN), a residual network, a neural network using a transformer model, or another neural network. This is not limited in this application.

Work at each layer in the neural network may be described by using a mathematical expression $\vec{y} = a(W \cdot \vec{x} + b)$. From a perspective of a physical layer, the work at each layer in the neural network may be understood as completing transformation from input space to output space (that is, from row space to column space of a matrix) by performing five operations on the input space (a set of input vectors). The five operations include: 1. dimension increasing/dimension reduction; 2. scaling up/scaling down; 3. rotation; 4. translation; and 5. "bending". The operations 1, 2, and 3 are performed by using $W \cdot \vec{x}$, the operation 4 is performed by using +b, and the operation 5 is performed by using a(). The word "space" is used herein for expression because a classified object is not a single thing, but a type of things. Space is a set of all individuals of this type of things. $W$ is a weight vector, and each value in the vector indicates a weight value of a neuron in the neural network at the layer. The vector W determines the space transformation from the input space to the output space described above, that is, a weight W of each layer controls a method for space transformation.

An objective of training the neural network is to finally obtain a weight matrix (a weight matrix formed by vectors W at a plurality of layers) at all layers of a trained neural network. Therefore, a training process of the neural network is essentially a manner of learning control of space transformation, and more specifically, learning a weight matrix.

For example, according to the training method provided in this application, all image processing networks that can be used for image processing and in which checkerboard effect appears on an image obtained after the image processing may be trained.

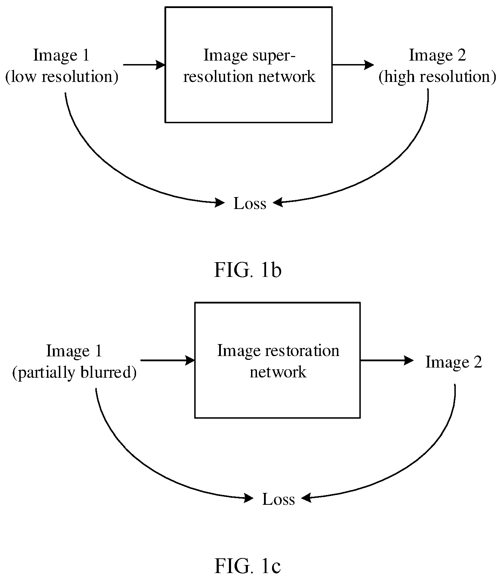

FIG. 1b is a diagram of an example of an application scenario. For example, an image processing network in FIG. 1b is an image super-resolution network, and an application scenario corresponding to FIG. 1b is training the image super-resolution network. The image super-resolution network may be used for image super-resolution, that is, to restore a low-resolution image or video to a high-resolution image or video.

With reference to FIG. 1b, for example, an image 1 is input to the image super-resolution network, and the image super-resolution network processes the image 1 to output an image 2, where a resolution of the image 2 is greater than a resolution of the image 1. Then, a loss (loss) may be determined based on the image 1 and the image 2, and then the image super-resolution network is trained based on the loss. A specific training process is described subsequently.

FIG. 1c is a diagram of an example of an application scenario. For example, an image processing network in FIG. 1c is an image restoration network, and an application scenario corresponding to FIG. 1c is training the image restoration network. The image restoration network may be used for image restoration, that is, to restore an image or a video with a blurred partial area to an image or a video with clear details in the partial area.

With reference to FIG. 1c, for example, an image 1 (a partial area in the image 1 is blurred) is input to the image restoration network, and an image 2 is output after restoration performed by the image restoration network. Then, a loss may be determined based on the image 1 and the image 2, and then the image restoration network is trained based on the loss. A specific training process is described subsequently.

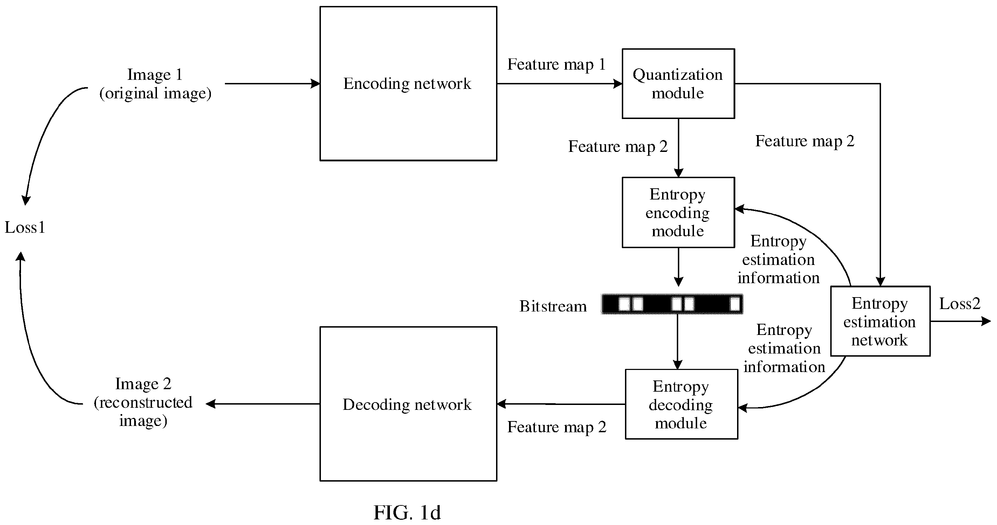

FIG. 1d is a diagram of an example of an application scenario. An image processing network in FIG. 1d includes an encoding network and a decoding network, and an application scenario corresponding to FIG. 1d is training the encoding network and the decoding network. An image/a video may be encoded based on the encoding network, and then an encoded image/video is decoded based on the decoding network.

With reference to FIG. 1d, for example, an image 1 (that is, an original image) is input to an encoding network, and the encoding network transforms the image 1 and outputs a feature map 1 to a quantization module. Then, the quantization module may quantize the feature map 1 to obtain a feature map 2. Afterward, the quantization module may input the feature map 2 to an entropy estimation network, and the entropy estimation network performs entropy estimation and outputs entropy estimation information of a feature point included in the feature map 2 to an entropy encoding module and an entropy decoding module. The quantization module may input the feature map 2 to the entropy encoding module, and the entropy encoding module performs, based on the entropy estimation information of the feature point included in the feature map 2, entropy encoding on the feature point included in the feature map 2, to obtain a bitstream; and then inputs the bitstream to the entropy decoding module. Then, the entropy decoding module may perform entropy decoding on the bitstream based on entropy estimation information of all feature points included in the feature map 2, and output the feature map 2 to the decoding network. Subsequently, the decoding network may transform the feature map 2 to obtain an image 2 (that is, a reconstructed image). Afterward, a loss 1 may be determined based on the image 1 and the image 2, and a loss 2 may be determined based on entropy estimation information determined by the entropy estimation network. The encoding network and the decoding network are trained based on the loss 1 and the loss 2. A specific training process is described subsequently.

The following uses FIG. 1d as an example to describe the training process of the image processing network.

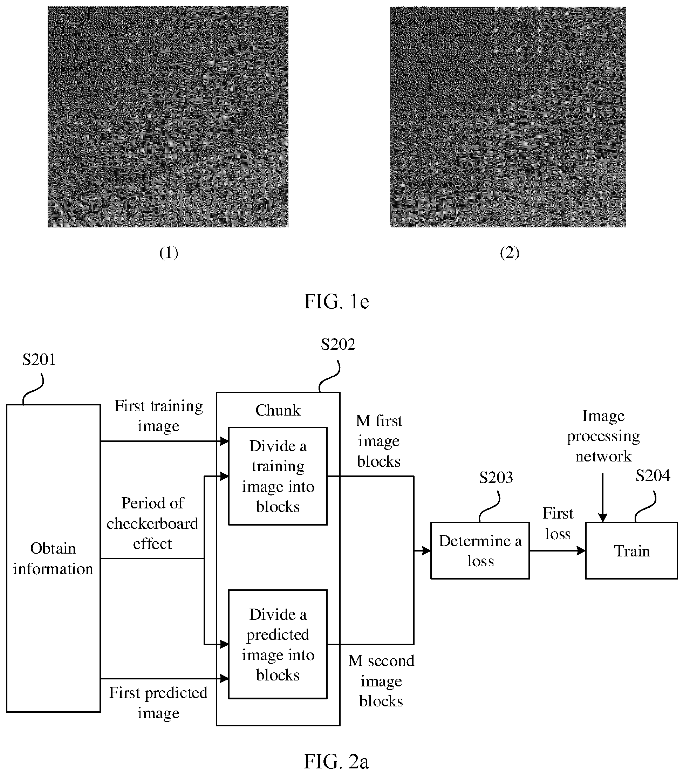

FIG. 1e is a diagram of an example of checkerboard effect. For example, (1) in FIG. 1e is an original image, and (2) in FIG. 1e is a reconstructed image obtained through encoding and decoding the original image in (1) in FIG. 1e according to the encoding and decoding process in FIG. 1c. With reference to FIG. 1e, it can be learned that checkerboard effect (a white box in (2) in FIG. 1e is one period of checkerboard effect) appears in the reconstructed image, and the checkerboard effect is periodic.

On this basis, in a process of training the image processing network in this application, images before and after processing performed by using the image processing network may be divided into a plurality of image blocks based on a period of checkerboard effect. Then, a loss is calculated through comparing differences between the image blocks before and after processing performed by using the image processing network. The image processing network is trained based on the loss, to compensate for the image blocks after processing performed by using the image processing network to different extent, thereby eliminating regularity of the checkerboard effect in an image processed by using the image processing network. In this way, visual quality of an image obtained through processing performed by using a trained image processing network can be improved. A specific training process of the image processing network may be as follows:

FIG. 2a is a diagram of an example of a training process.

S201: Obtain a first training image and a first predicted image, and obtain a period of checkerboard effect, where the first predicted image is generated by performing image processing on the first training image based on an image processing network.

For example, a plurality of images used for training the image processing network may be obtained. For ease of description, the image used for training the image processing network may be referred to as the first training image. In this application, an example in which the image processing network is trained by using one first training image is used for description.

For example, the first training image may be input to the image processing network, and the image processing network performs forward calculation (that is, image processing) to output the first predicted image.

For example, when the image processing network is an image super-resolution network, image processing performed by using the image processing network is image super-resolution, where a resolution of the first predicted image is higher than a resolution of the first training image. When the image processing network is an image restoration network, image processing performed by using the image processing network is image restoration, where the first training image is a partially blurred image. When the image processing network includes an encoding network and a decoding network, image processing performed by using the image processing network may include encoding and decoding. To be specific, the first training image may be encoded based on the encoding network, and then an encoding result of the first training image is decoded based on the decoding network. The first training image is a to-be-encoded image, and the first predicted image is a reconstructed image.

In a possible manner, the first predicted image output by the image processing network has checkerboard effect, and a period of the checkerboard effect may be determined through analyzing the first predicted image.

In a possible manner, the image processing network includes an upsampling layer (for example, the decoding network includes an upsampling layer). The image processing network performs an upsampling (for example, deconvolution) operation in an image processing process, and this type of operation causes different calculation modes of adjacent pixels. Therefore, finally, an intensity difference/a color difference of the adjacent pixels occurs, and the periodic checkerboard effect appears. The following uses 1-dimensional deconvolution as an example for description.

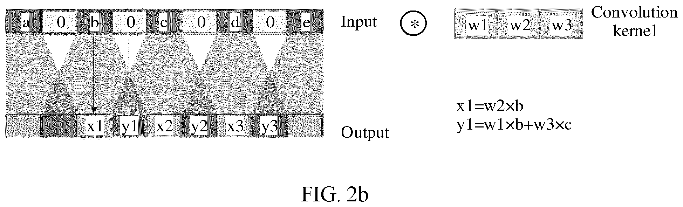

FIG. 2b is a diagram of an example of a deconvolution process.

With reference to FIG. 2b, for example, it is assumed that inputs are a, b, c, d, and e (where "0" in FIG. 2b is not an input but is supplemented by a zero padding operation in a deconvolution process), and a convolution kernel used for deconvolution is a 1*3 matrix (w1, w2, w3). Deconvolution is performed on the convolution kernel and the inputs, and obtained outputs are x1, y1, x2, y2, x3, and y3. Herein, x1, y1, x2, y2, x3, and y3 are calculated as follows: $x1 = w2 \times b$, $y1 = w1 \times b + w3 \times c$, $x2 = w2 \times c$, $y2 = w1 \times c + w3 \times d$, $x3 = w2 \times d$, and $y3 = w1 \times d + w3 \times e$.

With reference to FIG. 2b, because calculation manners of x and y are all different in a calculation process, modes (intensity/color, and the like) presented by x1, x2, and x3 are also different from those presented by y1, y2, and y3. As a result, periodic checkerboard effect appears in a result. It should be understood that a case of two-dimensional deconvolution is similar. Details are not described herein.

In addition, through testing the period of the checkerboard effect and a quantity of upsampling layers, it is found that the period of the checkerboard effect is related to the quantity of upsampling layers. Further, in a possible manner, the period of the checkerboard effect may be determined based on the quantity of upsampling layers included in the image processing network.

For example, the period of the checkerboard effect is a two-dimensional period. It can be learned based on FIG. 1e that the checkerboard effect is two-dimensional. Therefore, the two-dimensional period may indicate that the period of the checkerboard effect includes values of two dimensions, and the two dimensions correspond to a length and a width of an image.

In a possible manner, a shape of the period of the checkerboard effect may be rectangular, and a size of the period of the checkerboard effect may be represented by p*q, where p and q are positive integers, units of p and q are px (pixel), p and q may be equal or may be unequal. This is not limited in this application. A relationship between the quantity of upsampling layers included in the image processing network and the period of the checkerboard effect may be as follows:

$$T_{checkboard} = p * q = 2^C * 2^C.$$

Herein, $T_{checkboard}$ is the period of the checkerboard effect, C (C is a positive integer) is the quantity of upsampling layers, and $p = q = 2^C$.

It should be understood that p and q may be not equal. This is not limited in this application.

It should be noted that the period of the checkerboard effect may alternatively be another shape (for example, circular, triangular, oval, or an irregular shape). Details are not described herein again.

S202: Divide the first training image into M first image blocks, and divide the first predicted image into M second image blocks, based on the period, where both a size of the first image block and a size of the second image block are related to the period of the checkerboard effect, and M is an integer greater than 1.

For example, a quantity of periods of the checkerboard effect may be M.

For example, after the period of the checkerboard effect is determined, the first training image may be divided into the M first image blocks based on the period of the checkerboard effect, and the first predicted image may be divided into the M first image blocks based on the period of the checkerboard effect.

It should be noted that sizes of the M second image blocks may be the same or may be different. This is not limited in this application. A size of each second image block may be greater than, equal to, or less than the period of the checkerboard effect. For example, regardless of a relationship between the size of the second image block and the period of the checkerboard effect, it only needs to be ensured that the second image block has only one complete or incomplete period of the checkerboard effect.

It should be noted that sizes of the M first image blocks may be the same or may be different. This is not limited in this application. The size of each first image block may be greater than, equal to, or less than the period of the checkerboard effect. For example, regardless of the relationship between the size of the first image block and the period of the checkerboard effect, it only needs to be ensured that an area that is in the first predicted image and that is at a same area location of the first image block has only one complete or incomplete period of the checkerboard effect.

For example, the sizes of the first image block and the second image block may be equal or may be unequal. This is not limited in this application.

S203: Determine a first loss based on the M first image blocks and the M second image blocks.

For example, the first loss may be determined through comparing differences (or similarities) between the M first image blocks and the M second image blocks, where the first loss is used for compensating for the checkerboard effect of the image.

**In** a possible manner, the M first image blocks may be fused into one or more first feature blocks, and the M second image blocks may be fused into one or more second feature blocks, where a quantity of first feature blocks and a quantity of second feature blocks are both less than M. Then, a difference (or a similarity) between the first feature block and the second feature block is determined through comparing the first feature block with the second feature block. Afterward, the first loss may be determined based on the difference (or the similarity) between the first feature block and the second feature block.

S204: Train the image processing network based on the first loss.

For example, the image processing network may be trained (that is, back propagation) based on the first loss, to adjust a network parameter of the image processing network.

Further, the image processing network may be trained based on S201 to S204 by using a plurality of first training images and a plurality of first predicted images, until the image processing network satisfies a first preset condition. The first preset condition is a condition for stopping training the image processing network, and may be set according to a requirement. For example, a preset quantity of training times is reached, or a loss is less than a preset loss. This is not limited in this application.

Because the checkerboard effect is periodic, in this application, the images before and after processing performed by using the image processing network (the first training image is an image before processing, and the first predicted image is an image after processing) are divided into image blocks based on the period of the checkerboard effect. Then, the loss is calculated through comparing differences between the image blocks before and after processing performed by using the image processing network (that is, through comparing the M first image blocks with the M second image blocks). The image processing network is trained based on the loss, to effectively compensate for each image block (that is, the second image block) processed by using the image processing network, thereby reducing a difference between each first image block and a corresponding second image block. Both the size of the first image block and the size of the second image block are related to the period of the checkerboard effect. As the difference between each first image block and the corresponding second image block decreases, the checkerboard effect in each period is also eliminated to some extent. In this way, after the image processing network is trained based on the training method in this application, the checkerboard effect in an image obtained through processing performed by using a trained image processing network can be eliminated to some extent, thereby improving visual quality of the image obtained through processing performed by using the trained image processing network.

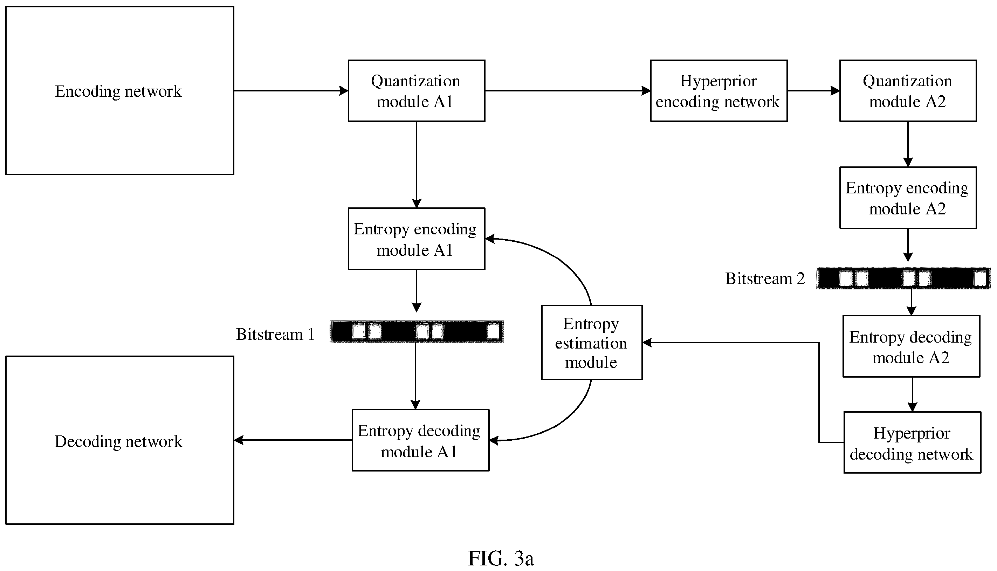

FIG. 3a is a diagram of an example of an end-to-end image compression framework.

With reference to FIG. 3a, for example, the end-to-end image compression framework includes an encoding network, a decoding network, a hyperprior encoding network, a hyperprior decoding network, an entropy estimation module, a quantization module (including a quantization module A1 and a quantization module A2), an entropy encoding module (including an entropy encoding module A1 and an entropy encoding module A2), and an entropy decoding module (including an entropy decoding module A1 and an entropy decoding module A2). The image processing network includes an encoding network, a decoding network, a hyperprior encoding network, and a hyperprior decoding network.

For example, the entropy estimation network in FIG. 1d may include the entropy estimation module, the hyperprior encoding network, and the hyperprior decoding network in FIG. 3a.

For example, the hyperprior encoding network and the hyperprior decoding network are configured to generate probability distribution; and the entropy estimation module is configured to perform entropy estimation based on the probability distribution, to generate entropy estimation information.

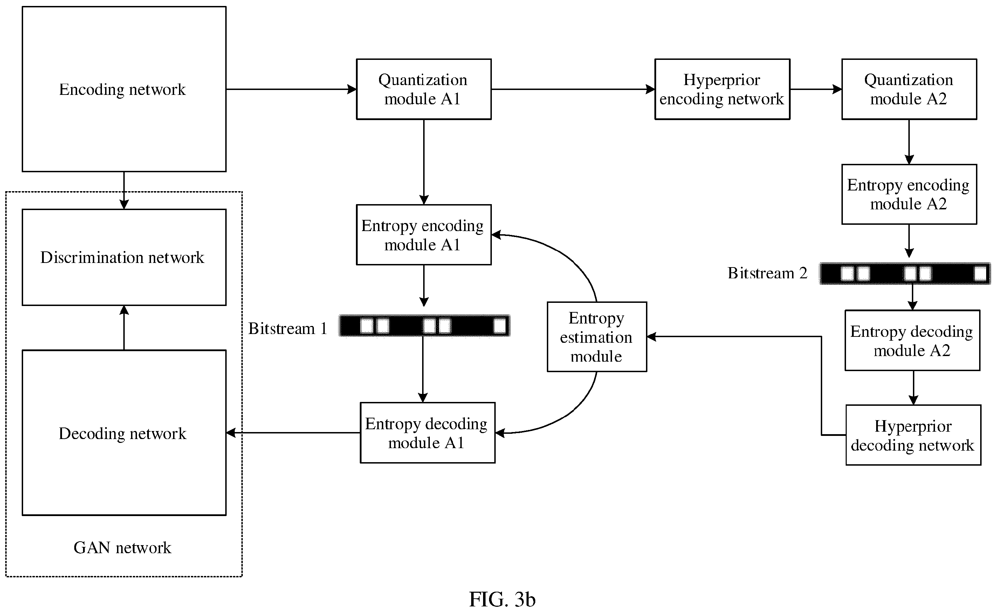

FIG. 3b is a diagram of an example of an end-to-end image compression framework. In FIG. 3b, a discrimination network (also referred to as a discriminator) is added on the basis of FIG. 3a. In this case, a decoding network may also be referred to as a generator network (also referred to as a generator), and the discrimination network and the decoding network may form a generative adversarial network (GAN network).

For example, the image processing network may be pre-trained first based on the end-to-end image compression framework shown in FIG. 3a. To be specific, the untrained encoding network, the untrained decoding network, the untrained hyperprior encoding network, and the untrained hyperprior decoding network are jointly pre-trained. Then, after pre-training of the image processing network shown in FIG. 3a is completed, the image processing network is trained based on the end-to-end image compression framework in FIG. 3b on the basis of FIG. 3a. To be specific, a pre-trained encoding network, a pre-trained decoding network, a pre-trained hyperprior encoding network, and a pre-trained hyperprior decoding network are jointly trained. It should be noted that the discrimination network in FIG. 3b may be a trained discrimination network, or may be an untrained discrimination network (in this case, the discrimination network may be trained first, and the image processing network is trained after training of the discrimination network is completed). This is not limited in this application.

Through pre-training the image processing network, convergence of the image processing network can be faster in a subsequent process of training the image processing network, and encoding quality of the trained image processing network is higher.

It should be noted that pre-training of the image processing network may be skipped, and the image processing network is directly trained based on the end-to-end image compression framework shown in FIG. 3b. This is not limited in this application. This application is described by using an example in which the image processing network is pre-trained and trained.

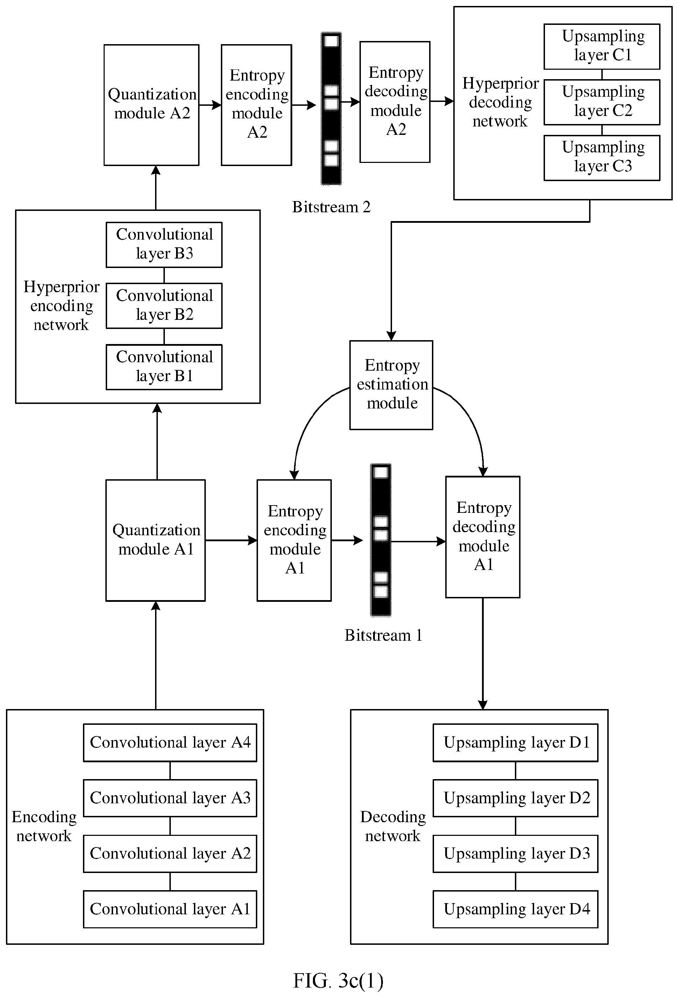

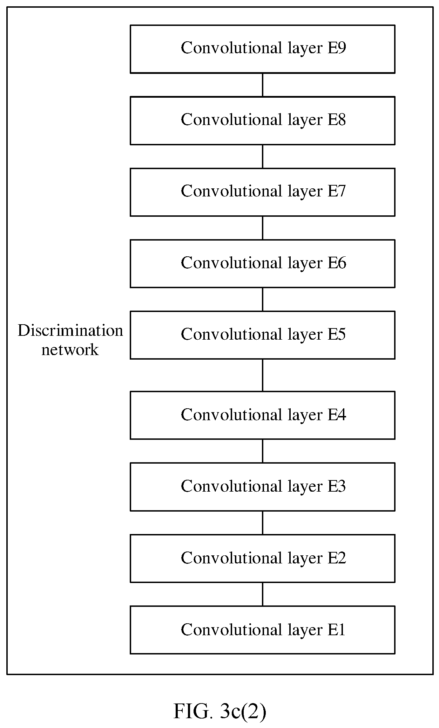

FIG. 3c(1) and FIG. 3c(2) are a diagram of an example of a network structure. In the embodiment of FIG. 3c(1) and FIG. 3c(2), network structures of an encoding network, a decoding network, a hyperprior encoding network, a hyperprior decoding network, and a discrimination network are shown.

With reference to FIG. 3c(1), for example, the encoding network may include a convolutional layer A1, a convolutional layer A2, a convolutional layer A3, and a convolutional layer A4. It should be understood that FIG. 3c(1) is merely an example of the encoding network in this application. The encoding network in this application may include more or fewer convolutional layers than those in FIG. 3c(1), or another network layer.

For example, sizes of convolution kernels of the convolutional layer A1, the convolutional layer A2, the convolutional layer A3, and the convolutional layer A4 may be 5*5, and convolution steps are 2. (The convolution kernels may also be referred to as convolution operators. The convolution operator may be essentially a weight matrix. The weight matrix is usually predefined. Image processing is used as an example. Different weight matrices are used to extract different features in an image. For example, one weight matrix is used to extract image edge information, another weight matrix is used to extract a specific color of the image, and still another weight matrix is used to blur unnecessary noise in the image. Weight values in these weight matrices need to be obtained through a large amount of training in actual application. Each weight matrix formed by using weight values obtained through training may be used to extract information from input data, so that the network performs correct prediction.) It should be understood that sizes of the convolution kernels and convolution steps of the convolutional layer A1, the convolutional layer A2, the convolutional layer A3, and the convolutional layer A4 are not limited in this application. It should be noted that the convolution steps of the convolutional layer A1, the convolutional layer A2, the convolutional layer A3, and the convolutional layer A4 are 2, indicating that the convolutional layer A1, the convolutional layer A2, the convolutional layer A3, and the convolutional layer A4 perform a down-sampling operation simultaneously with a convolution operation.

With reference to FIG. 3c(1), for example, the decoding network may include an upsampling layer D1, an upsampling layer D2, an upsampling layer D3, and an upsampling layer D4. It should be understood that FIG. 3c(1) is merely an example of the decoding network in this application. The decoding network in this application may include more or fewer upsampling layers than those in FIG. 3c(1), or another network layer.

For example, the upsampling layer D1, the upsampling layer D2, the upsampling layer D3, and the upsampling layer D4 each may include a deconvolution unit. Sizes of convolution kernels of the deconvolution units included in the upsampling layer D1, the upsampling layer D2, the upsampling layer D3, and the upsampling layer D4 may be 5*5, and convolution steps are 2. It should be understood that the sizes of the convolution kernels and the convolution steps of the deconvolution units included in the upsampling layer D1, the upsampling layer D2, the upsampling layer D3, and the upsampling layer D4 are not limited in this application.

With reference to FIG. 3c(1), for example, the hyperprior encoding network may include a convolutional layer B1, a convolutional layer B2, and a convolutional layer B3. It should be understood that FIG. 3c(1) is merely an example of the hyperprior encoding network in this application. The hyperprior encoding network in this application may include more or fewer convolutional layers than those in FIG. 3c(1), or another network layer.

For example, the convolutional layer B1 and the convolutional layer B2 each may include a convolution unit and an activation unit (which may be a Leaky ReLU (leaky rectified linear unit)). A size of a convolution kernel of the convolution unit may be 5*5, and a convolution step is 2. A size of a convolution kernel of the convolutional layer B3 may be 3*3, and a convolution step may be 1. It should be understood that none of the sizes of the convolution kernels and the convolution steps of the convolution units of the convolutional layer B1 and the convolutional layer B2, and the size of the convolution kernel and the convolution step of the convolutional layer B3 is limited in this application. It should be noted that the convolution step of the convolutional layer B3 is 1, indicating that the convolutional layer B3 performs only a convolution operation and does not perform a downsampling operation.

With reference to FIG. 3c(1), for example, the hyperprior decoding network may include an upsampling layer C1, an upsampling layer C2, and a convolutional layer C3. It should be understood that FIG. 3c(1) is merely an example of the hyperprior decoding network in this application. The hyperprior decoding network in this application may include more or fewer upsampling layers than those in FIG. 3c(1), or another network layer.

For example, the upsampling layer C1 and the upsampling layer C2 each may include a deconvolution unit and an activation unit (which may be a Leaky ReLU (leaky rectified linear unit)). Sizes of convolution kernels of the deconvolution units included in the upsampling layer C1 and the upsampling layer C2 may be 5*5, and convolution steps are 2. A size of a convolution kernel of the convolutional layer C3 may be 3*3, and a convolution step is 1. It should be understood that none of the sizes of the convolution kernels and the convolution steps of the deconvolution units included in the upsampling layer C1 and the upsampling layer C2, and the size of the convolution kernel and the convolution step of the convolutional layer C3 is limited in this application.

With reference to FIG. 3c(2), for example, the discrimination network may include a convolutional layer E1, a convolutional layer E2, a convolutional layer E3, a convolutional layer E4, a convolutional layer E5, a convolutional layer E6, a convolutional layer E7, a convolutional layer E8, and a convolutional layer E9. It should be understood that FIG. 3c(2) is merely an example of the discrimination network in this application. The discrimination network in this application may include more or fewer convolutional layers than those in FIG. 3c(2), or another network layer.

For example, the convolutional layer E1 may include a convolution unit and an activation unit (which may be a Leaky ReLU (leaky rectified linear unit)). A size of a convolution kernel of the convolution unit of the convolutional layer E1 may be 3*3, and a convolution step may be 1. For example, the convolutional layer E2, the convolutional layer E3, the convolutional layer E4, the convolutional layer E5, the convolutional layer E6, the convolutional layer E7, and the convolutional layer E8 each may include a convolution unit, an activation unit (which may be a Leaky ReLU (leaky rectified linear unit)), and a BN (Batch Normalization, batch normalization) unit. Sizes of convolution kernels of the convolution units included in the convolutional layer E2, the convolutional layer E3, the convolutional layer E4, the convolutional layer E5, the convolutional layer E6, the convolutional layer E7, and the convolutional layer E8 may be 3*3. Convolution steps of the convolution units included in the convolutional layer E3, the convolutional layer E5, and the convolutional layer E7 may be 1. Convolution steps of the convolution units included in the convolutional layer E2, the convolutional layer E4, the convolutional layer E6, and the convolutional layer E8 may be 2. A size of a convolution kernel of the convolutional layer E9 may be 3*3, and a convolution step may be 1. It should be understood that none of the sizes of the convolution kernels and the convolution steps of the deconvolution units included in the convolutional layer E1 to the convolutional layer E8, and the size of the convolution kernel and the convolution step of the convolutional layer E9 is limited in this application.

Based on FIG. 3a and FIG. 3b, the following describes pre-training and training processes of the image processing network.

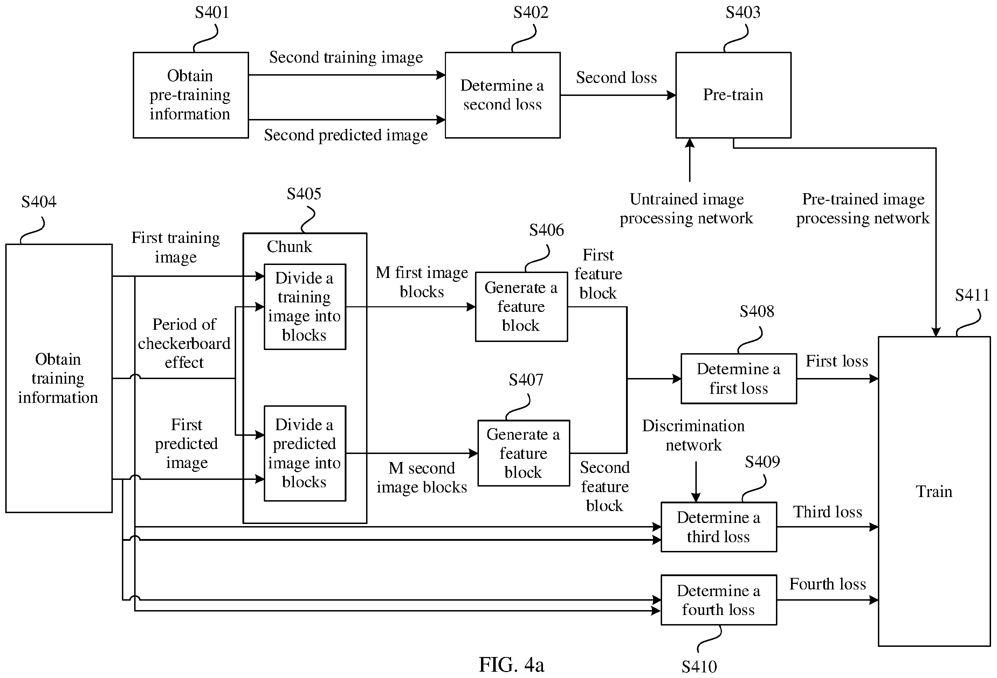

FIG. 4a is a diagram of an example of a training process.

An image processing network may be pre-trained based on the framework in FIG. 3a. Refer to S401 to S403.

S401: Obtain a second training image and a second predicted image, where the second predicted image is obtained through encoding the second training image based on an untrained encoding network and then decoding an encoding result of the second training image based on an untrained decoding network.

For example, a plurality of images used for pre-training the image processing network may be obtained. For ease of description, the image used for pre-training the image processing network may be referred to as the second training image. In this application, an example in which the image processing network is pre-trained by using one second training image is used for description.

With reference to FIG. 3a, for example, the second training image may be input to the encoding network, and the encoding network transforms the second training image and outputs a feature map 1 to the quantization module A1. Then, the quantization module A1 may quantize the feature map 1 to obtain a feature map 2. Afterward, the quantization module A1 may input the feature map 2 to the hyperprior encoding network, and the hyperprior encoding network performs hyperprior encoding on the feature map 2 to output a hyperprior feature. Then, the hyperprior feature may be input to the quantization module A2. The quantization module A2 quantizes the hyperprior feature and inputs a quantized hyperprior feature to the entropy encoding module A2, and the entropy encoding module A2 performs entropy encoding on the quantized hyperprior feature to obtain a bitstream 2. Afterward, the bitstream 2 may be input to the entropy decoding module A2 for entropy decoding, to obtain a quantized hyperprior feature, and the quantized hyperprior feature is input to the hyperprior decoding network. Then, the hyperprior decoding network may perform hyperprior decoding on the quantized hyperprior feature, and output probability distribution to the entropy estimation module. The entropy estimation module performs entropy estimation based on the probability distribution, and outputs entropy estimation information of a feature point included in the feature map 2 to the entropy encoding module A1 and the entropy decoding module A1. The quantization module A1 may input the feature map 2 to the entropy encoding module A1, and the entropy encoding module A1 performs, based on the entropy estimation information of the feature point included in the feature map 2, entropy encoding on the feature point included in the feature map 2, to obtain a bitstream 1; and then inputs the bitstream 1 to the entropy decoding module A1. Then, the entropy decoding module A1 may perform entropy decoding on the bitstream based on entropy estimation information of all feature points included in the feature map 2, and output the feature map 2 to the decoding network. Subsequently, the decoding network may transform the feature map 2 to obtain a second predicted image (that is, a reconstructed image).

Then, the image processing network may be pre-trained based on the second predicted image and the second training image. Refer to S402 and S403.

S402: Determine a second loss based on the second predicted image and the second training image.

S403: Pre-train the untrained image processing network based on the second loss.

For example, after the second predicted image is determined, the untrained image processing network may be pre-trained based on the second predicted image and the second training image.

For example, the second loss may be determined based on the second predicted image and the second training image. A calculation formula of the second loss may be shown in Formula (1) below:

$$L_{fg} = L_{rate} + \alpha * L_{mse} \qquad (1)$$

Herein, $L_{fg}$ represents the second loss, $L_{rate}$ represents a bit rate loss, $L_{mse}$ represents an MSE (Mean Square Error, mean square error) loss, and $\alpha$ is a weight coefficient corresponding to $L_{mse}$.

For example, a calculation formula of $L_{rate}$ may be shown in Formula (2) below:

$$L_{rate} = \sum_{i1=1}^{H1} S_{i1} \qquad (2)$$

Herein, $S_{i1}$ is entropy estimation information of an $i1^{th}$ feature point in the feature map 2, and H1 is a total quantity of feature points in the feature map 2.

Further, entropy estimation information that is of each feature point in the feature map 2 and that is estimated by the entropy estimation module may be obtained, and then the entropy estimation information of all the feature points in the feature map 2 is added according to Formula (2), to obtain a bit rate loss $L_{rate}$.

For example, a calculation formula of $L_{mse}$ may be shown in Formula (3) below:

$$L_{mse} = \frac{1}{H2} \sum_{i2=1}^{H2} \left( Y_{i2} - Y_{i2} \right)^2 \qquad (3)$$

Herein, H2 is a quantity of pixels included in the second predicted image or the second training image, $Y_{2i}$ is a pixel at an $i2^{th}$ location in the second predicted image (that is, a pixel value of the pixel at the $i2^{th}$ location in the second predicted image), and $Y_{i2}$ is a pixel at an $i2^{th}$ location in the second training image (that is, a pixel value of the pixel at the $i2^{th}$ location in the second training image).

Further, $L_{mse}$ may be obtained through calculation according to Formula (3), pixels of the second training image, and pixels of the second predicted image.

In this way, after the bit rate loss $L_{rate}$ and the MSE loss $L_{mse}$ are determined, weighting calculation may be performed on the bit rate loss $L_{rate}$ and the MSE loss $L_{mse}$ according to Formula (1) based on a weight coefficient (that is, "1") corresponding to the bit rate loss $L_{rate}$ and a weight coefficient (that is, "$\alpha$") corresponding to the MSE loss $L_{mse}$, to obtain the second loss.

Then, the untrained image processing network may be pre-trained based on the second loss. In the foregoing manner, the untrained image processing network may be pre-trained by using the plurality of second training images and the plurality of corresponding second predicted images until the image processing network satisfies a second preset condition. The second preset condition is a condition for stopping pre-training the image processing network, and may be set according to a requirement. For example, a preset quantity of training times is reached, or a loss is less than a preset loss. This is not limited in this application.

An MSE loss function $L_{mse}$ is used as a loss function to pre-train the image processing network, so that objective quality (for example, a PSNR) of an image obtained through image processing performed by using a pre-trained image processing network can be improved. In this way, the image processing network is pre-trained based on the second loss, so that the objective quality of the image obtained through image processing performed by using the pre-trained image processing network can be improved. In addition, through pre-training the image processing network, the image processing network can converge faster and better in a subsequent training process.

Subsequently, the image processing network may be trained based on the framework in FIG. 3b. Refer to S404 to S411.

S404: Obtain a first training image and a first predicted image, and obtain a period of checkerboard effect, where the first predicted image is generated by performing image processing on the first training image based on an image processing network.

For example, for S404, refer to the descriptions of S201. Details are not described herein again.

For example, there may be a plurality of first training images, and there may also be a plurality of second training images.

In a possible manner, there is an intersection set between a set including the plurality of first training images and a set including the plurality of second training images.

In a possible manner, there is no intersection set between a set including the plurality of first training images and a set including the plurality of second training images. This is not limited in this application.

The following example is used for description: The decoding network in the image processing network includes C upsampling layers, and correspondingly, the period of the checkerboard effect is $T_{checkboard} = p*q = 2^C*2^C$.

For example, if the decoding network in the image processing network includes two upsampling layers, the period of the checkerboard effect is 4*4.

S405: Divide the first training image into M first image blocks, and divide the first predicted image into M second image blocks, based on the period.

The following example is used for description: Both a size of the first image block and a size of the second image block are equal to the period of the checkerboard effect.

For example, the first training image may be divided into the M first image blocks whose sizes are all $2^C*2^C$, and the first predicted image may be divided into the M second image blocks whose sizes are all $2^C*2^C$.

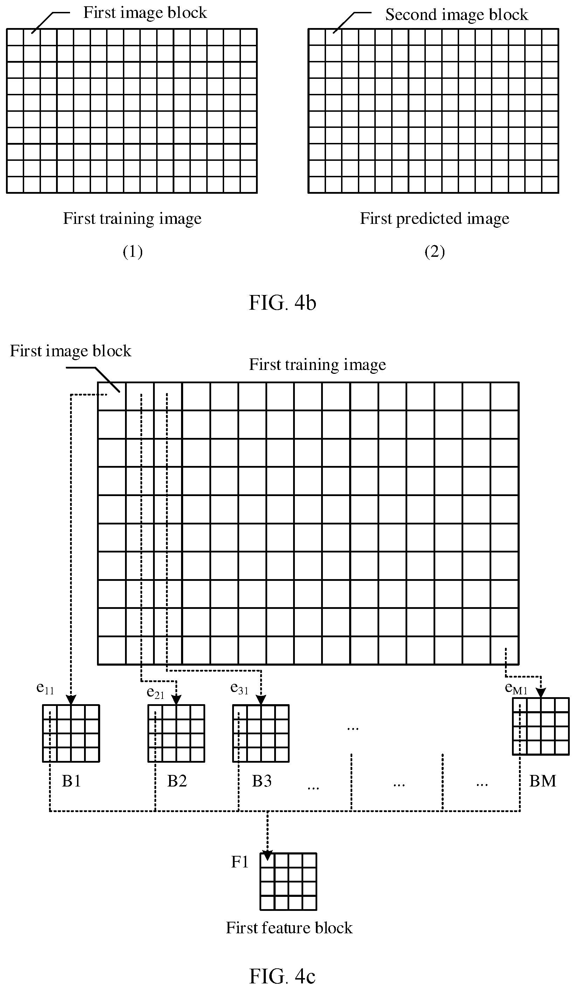

FIG. 4b is a diagram of an example of a chunking process. In FIG. 4b, if the decoding network in the image processing network includes two upsampling layers, the period of the checkerboard effect is 4*4.

With reference to (1) in FIG. 4b, for example, (1) in FIG. 4b is a first training image, and a size of the first training image is 60*40. The first training image may be divided into 150 (that is, M=150) first image blocks whose sizes are 4*4.

With reference to (2) in FIG. 4b, for example, (2) in FIG. 4b is a first predicted image, and a size of the first predicted image is 60*40. The first training image may be divided into 150 (that is, M=150) second image blocks whose sizes are 4*4.

S406: Perform calculation based on pixels at corresponding locations in the M first image blocks, to obtain a characteristic value of a corresponding location in a first feature block, where one characteristic value is correspondingly obtained for pixels at same locations in the M first image blocks.

For example, a manner of fusing the M first image blocks into the first feature block may be: performing calculation based on the pixels at the corresponding locations in the M first image blocks, to obtain the characteristic value of the corresponding location in the first feature block. In this way, information of the M first image blocks is summarized into one or more first feature blocks, and information of the M second image blocks is summarized into one or more second feature blocks. Then, the first loss is calculated through comparing the first feature block with the second feature block, to more targetedly compensate for the periodic checkerboard effect, thereby implementing better effect of eliminating the checkerboard effect.

In a possible manner, all or some of the first image blocks may be fused. In this way, N first image blocks may be selected from the M first image blocks, and then a characteristic value of a corresponding location in the first feature block may be obtained through calculation based on pixels at corresponding locations in the N first image blocks. Herein, N is a positive integer less than or equal to M. When the first feature block is obtained through calculation based on pixels at corresponding locations in some of the first image blocks and the second feature block is obtained through calculation based on pixels at corresponding locations in some of the second image blocks, less information is used for calculation of the first loss, thereby improving efficiency of calculating the first loss. When the first feature block is obtained through calculation based on pixels at corresponding locations in all the first image blocks and the second feature block is obtained through calculation based on pixels at corresponding locations in all the second image blocks, more comprehensive information is used for calculation of the first loss, thereby improving accuracy of the first loss.

In a possible manner, all or some pixels in each of the N first image blocks may be fused. Further, calculation may be performed based on first target pixels at corresponding first locations in all the first image blocks in the N first image blocks, to obtain a characteristic value of a corresponding first location in the first feature block. A quantity of first target pixels is less than or equal to a total quantity of pixels included in the first image block. The first location may be set according to a requirement, and a quantity of first target pixels may be set according to a requirement. This is not limited in this application. When calculation is performed based on some pixels in the image block, less information is used for calculating the first loss, thereby improving efficiency of calculating the first loss. When calculation is performed based on all pixels in the image block, more comprehensive information is used for calculating the first loss, thereby improving accuracy of the first loss.

It should be noted that there may be one or more first feature blocks. This is not limited in this application. The following example is used for description: N=M, the quantity of first feature blocks is 1, the quantity of first target pixels is equal to the total quantity of pixels included in the first image block, and the first location is locations of all pixels in the first image block.

FIG. 4c is a diagram of an example of a process of generating a first feature block. In the embodiment of FIG. 4c, a process of fusing the M first image blocks (a manner of dividing the first training image into the M first image blocks is shown in FIG. 4b) into one first feature block is described.

With reference to FIG. 4c, for example, the M first image blocks obtained through dividing the first training image may be respectively referred to as B1, B2, B3, ..., and BM. 16 pixels included in B1 are referred to as $e_{11}$, $e_{12}$, $e_{13}$, ..., and $e_{116}$; 16 pixels included in B2 are referred to as $e_{21}$, $e_{22}$, $e_{23}$, ..., and $e_{216}$; 16 pixels included in B3 are referred to as $e_{31}$, $e_{32}$, $e_{33}$, ..., and $e_{316}$; ...; and 16 pixels included in BM are referred to as $e_{M1}$, $e_{M2}$, $e_{M3}$, ..., and $e_{M16}$.

For example, linear calculation may be performed based on pixels at corresponding locations in the M first image blocks, to obtain a characteristic value of a corresponding location in the first feature block.

In a possible manner, linear calculation may be performed with reference to Formula (4) below based on the pixels at the corresponding locations in the M first image blocks, to obtain the characteristic value of the corresponding location in the first feature block:

$$F_i = \frac{sum\left(e_{1i},\ e_{2i},\ e_{3i},\ ...,\ e_{Mi}\right)}{M} \quad (4)$$

Herein, $F_i$ represents a characteristic value of an $i^{th}$ location in the first feature block, and *sum* is a summation function. $e_{1i}$ represents a pixel at an $i^{th}$ location in a $1^{st}$ first image block; $e_{2i}$ represents a pixel at an $i^{th}$ location in a $2^{nd}$ first image block; $e_{3i}$ represents a pixel at an $i^{th}$ location in a $3^{rd}$ first image block; ...; and $e_{Mi}$ represents a pixel at an $i^{th}$ location in an $M^{th}$ first image block.

An example of calculating the characteristic value $F_1$ of a first location in the first feature block is used for description. For example, an average value of a pixel $e_{11}$ in B1, a pixel $e_{21}$ in B2, a pixel $e_{31}$ in B3, ..., and a pixel $e_{M1}$ in BM may be calculated; and the obtained average value is used as the characteristic value F1 of the first location in the first feature block. By analogy, M characteristic values of M locations in the first feature block may be obtained.

In this way, the characteristic value of the first feature block is determined in a manner of calculating a pixel average value. Calculation is simple, thereby improving efficiency of calculating the first loss.

It should be understood that Formula (4) is merely an example of linear calculation. In this application, linear calculation may be alternatively performed in another manner (for example, linear weighting) based on the pixels at the corresponding locations in the M first image blocks, to obtain the characteristic value of the corresponding location in the first feature block.

It should be noted that, in this application, non-linear calculation may be alternatively performed based on the pixels at the corresponding locations in the M first image blocks, to obtain the characteristic value of the corresponding location in the first feature block. For example, refer to Formula (5):

$$F_i = A1 * e_{1i}^2 + A2 * e_{2i}^2 + A3 * e_{3i}^2 + ... + AM * e_{Mi}^2 \quad (5)$$

A1 represents a weight coefficient corresponding to the pixel at the $i^{th}$ location in the $1^{st}$ first image block (B1); A2 represents a weight coefficient corresponding to the pixel at the $i^{th}$ location in the $2^{nd}$ first image block (B2); A3 represents a weight coefficient corresponding to the pixel at the $i^{th}$ location in the $3^{rd}$ first image block (B3); ...; and AM represents a weight coefficient corresponding to the pixel at the $i^{th}$ location in the $M^{th}$ first image block (BM).

It should be noted that, in this application, calculation may be performed for the pixels based on a convolutional layer, to determine the characteristic value of the feature block. For example, the M first image blocks may be input to the convolutional layer (one or more layers) and a fully connected layer, to obtain the first feature block output by the fully connected layer.

It should be understood that, in this application, another manner combination may be alternatively used. This is not limited in this application.

S407: Perform calculation based on pixels at corresponding locations in the M second image blocks, to obtain a characteristic value of a corresponding location in a second feature block, where one characteristic value is correspondingly obtained for pixels at same locations in the M second image blocks.

For example, for S407, refer to the descriptions of S408. Details are not described herein again.

S408: Determine the first loss based on the first feature block and the second feature block.

In a possible manner, the first loss may be determined based on a point-to-point loss between the first feature block and the second feature block.

For example, the point-to-point loss between the first feature block and the second feature block may be based on a pixel at a third location in the first feature block and a pixel at a third location in the second feature block.

In a possible manner, the point-to-point loss may include an Ln distance. For example, the distance Ln is a distance L1, and the distance L1 may be calculated with reference to Formula (6) below:

$$L1 = \frac{1}{p*q} * \sum_{i=1}^{p*q} \left| F_i - F_i \right| \quad (6)$$

Herein, $L1$ is the L1 distance, $F_i$ represents the characteristic value of the $i^{th}$ location in the first feature block, and $F_i$ represents a characteristic value of an $i^{th}$ location in the second feature block.

It should be understood that the Ln distance may further include an L2 distance, an L-Inf distance, and the like. This is not limited in this application. Calculation formulas of the L2 distance and the L-Inf distance are similar to the calculation formula of the L1 distance. Details are not described herein again.

For example, the point-to-point loss may be determined as the first loss. This may be shown in Formula (7) below:

$$L_{pc} = L1 = \frac{1}{p*q} * \sum_{i=1}^{p*q} \left| F_i - F_i \right| \quad (7)$$

Herein, $L_{pc}$ is the first loss.

In a possible manner, the first loss may be determined based on a feature-based loss between the first feature block and the second feature block.

For example, the feature-based loss may include an SSIM, an MSSSIM, an LPIPS, and the like (reference may be made to descriptions in the conventional technologies for calculation formulas of the SSIM, the MSSSIM, and the LPIPS, and details are not described herein). This is not limited in this application.

For example, the first feature block and the second feature block may be further input to a neural network (for example, a convolutional network or a VGG network (Visual Geometry Group Network, visual geometric group network)), and the neural network outputs a first feature of the first feature block and a second feature of the second feature block. Then, a distance between the first feature and the second feature is calculated, to obtain the feature-based loss.

For example, an opposite number of the feature-based loss may be used as the first loss. For example, when the feature-based loss is the SSIM, a relationship between the first loss and the SSIM may be shown in Formula (8) below:

$$L_{pc} = -SSIM\left(F, F\right) \quad (8)$$

Herein, $L_{pc}$ is the first loss, F is the first feature block, and $F$ is the second feature block.

For example, a manner of training the image processing network based on the first loss may be shown in S409 and S410 below:

S409: Determine a third loss based on discrimination results obtained by the discrimination network for the first training image and the first predicted image, where the third loss is a loss of a generative adversarial network GAN.

For example, a calculation formula of the GAN loss may be shown in Formula (9) below:

$$L_{GAN} = \sum E\left(\log D_d\right) + \sum E\left[\log\left(1 - D\left(G\left(p\right)\right)\right)\right] \quad (9)$$

Herein, $E$ is an expectation, $D_d$ is a discrimination result of the discrimination network for the first training image, and $D(G(p))$ is a discrimination result of the discrimination network for the first predicted image. In the process of training the image processing network, $E(\log D_d)$ may be a constant item.

Further, the third loss may be calculated according to Formula (9) based on the discrimination result of the discrimination network for the first training image and the discrimination result of the discrimination network for the first predicted image.

S410: Determine a fourth loss, where the fourth loss includes at least one of the following: an L1 loss, a bit rate loss, a perceptual loss, and an edge loss.

For example, a final loss $L_{fg}$ used for training the image processing network may be calculated by using Formula (10) below:

$$L_{fg} = L_{rate} + \alpha * L_1 + \beta * \left( L_{percep} + \gamma L_{GAN} \right) + \delta * L_{edge} + \eta * L_{pc} \quad (10)$$

Herein, $L_{rate}$ represents the bit rate loss, $L_1$ represents the L1 distance, and $\alpha$ is a weight coefficient of $L_1$. $L_{percep}$ represents the perceptual loss, $L_{GAN}$ represents the GAN loss, $\beta$ is a weight coefficient of $L_{percep}$ and $L_{GAN}$, $\delta$ $L_{edge}$ represents the edge loss, $\delta$ is a weight coefficient of $L_{edge}$, $L_{pc}$ represents the first loss, and $\eta$ is a weight coefficient of $L_{pc}$.

It should be understood that the final loss $L_{fg}$ used for training the image processing network may be calculated based on $L_{pc}$ and $L_{GAN}$, and any one or more of $L_1$, $L_{rate}$, $L_{percep}$, and $L_{edge}$ in Formula (10). This is not limited in this application. The following example is used for description: The final loss $L_{fg}$ used for training the image processing network is calculated according to Formula (10).

For manners of calculating the bit rate loss $L_{rate}$, calculating the L1 distance, calculating the first loss $L_{pc}$, and calculating the third loss $L_{GAN}$, refer to the foregoing descriptions. Details are not described herein again.

For example, $L_{percep}$ may be calculated based on a manner of calculating an LPIPS loss by using the first training image and the first predicted image as calculation data. For details, refer to a manner of calculating an LPIPS loss in the conventional technologies. Details are not described herein.

For example, $L_{edge}$ may be the L1 distance. The L1 distance may be calculated for an edge area, and the edge loss may be obtained. For example, an edge detector (which may also be referred to as an edge detection network) may be used to detect a first edge area of the first training image and a second edge area of the first predicted image. Then, an L1 distance between the first edge area and the second edge area may be calculated, to obtain an edge loss.

S411: Train the pre-trained image processing network based on the first loss, the third loss, and the fourth loss.

For example, after the first loss, the third loss, and the fourth loss are obtained, weighting calculation may be performed on the first loss, the third loss, and the fourth loss based on a weight coefficient (for example, "$\eta$" in Formula (10)) corresponding to the first loss, a weight coefficient (for example, "$\beta*\gamma$" in Formula (10)) corresponding to the third loss, and a weight coefficient (for example, in Formula (10), the weight coefficient corresponding to the bit rate loss is "1", the weight coefficient corresponding to the L1 loss is "$\alpha$", the weight coefficient corresponding to the perceptual loss is "$\beta$", and the weight coefficient corresponding to the edge loss is "$\delta$") corresponding to the fourth loss, to obtain the final loss. Then, the image processing network is trained based on the final loss.

It should be understood that the image processing network may be alternatively trained based on only the first loss and the third loss. In comparison with a case of using only the first loss, the checkerboard effect can be better compensated for with reference to the first loss and the third loss, to eliminate the checkerboard effect to greater extent.

When the image processing network is trained based on the first loss, the third loss, and the fourth loss, quality (including objective quality and subjective quality (which may also be referred to as visual quality)) of an image processed by a trained image processing network can be improved.

For example, the upsampling layer of the decoding network causes checkerboard effect, and the upsampling layer of the hyperprior decoding network also causes checkerboard effect (which is weaker than the checkerboard effect caused by the decoding network, and has a longer period of the checkerboard effect). Further, to further improve visual quality of the reconstructed image, a period (referred to as a first period subsequently) of the checkerboard effect caused by the upsampling layer of the decoding network and a period (referred to as a second period subsequently) of the checkerboard effect caused by the upsampling layer of the hyperprior decoding network may be obtained. Then, the first training image may be divided into the M first image blocks, and the first predicted image may be divided into the M second image blocks, based on the first period and the second period. Afterward, the pre-trained image processing network (including the encoding network, the decoding network, the hyperprior encoding network, and the hyperprior decoding network) is trained based on the first loss determined based on the M first image blocks and the M second image blocks. A specific process may be as follows:

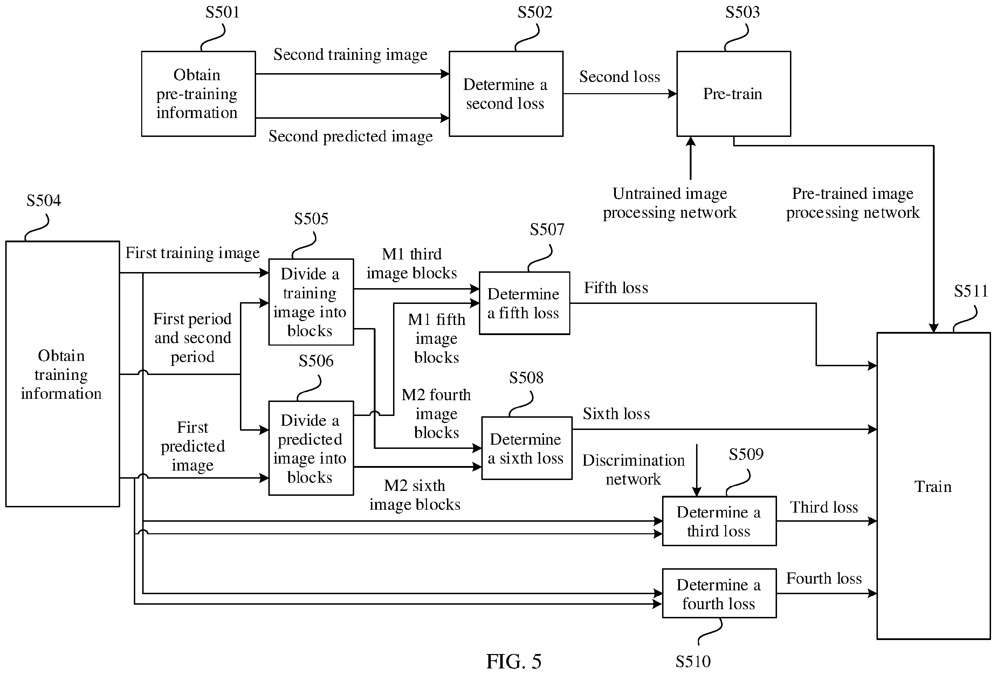

FIG. 5 is a diagram of an example of a training process.

S501: Obtain a second training image and a second predicted image, where the second predicted image is obtained through encoding the second training image based on an untrained encoding network and then decoding an encoding result of the second training image based on an untrained decoding network.

S502: Determine a second loss based on the second predicted image and the second training image.

S503: Pre-train the untrained image processing network based on the second loss.

For example, for S501 to S503, refer to the descriptions of S401 to S403. Details are not described herein again.

S504: Obtain a first training image and a first predicted image, and obtain a period of checkerboard effect, where the first predicted image is generated by performing image processing on the first training image based on an image processing network, and the period of the checkerboard effect includes a first period and a second period.

For example, the first period is less than the second period.

For example, the first period may be determined based on a quantity of upsampling layers of the decoding network. The first period may be represented by p1*q1, where p1 and q1 are positive integers, units of p1 and q1 are px (pixel), p1 and q1 may be equal or may be unequal. This is not limited in this application.

For example, if the quantity of upsampling layers of the decoding network is C, the first period is $T1_{checkboard} = p1*q1 = 2^C*2^C$.

For example, the second period may be determined based on the first period and a quantity of upsampling layers of a hyperprior decoding network. The second period may be represented by p2*q2, where p2 and q2 are positive integers, units of p2 and q2 are px (pixel), and p2 and q2 may be equal or unequal. This is not limited in this application.

In a possible manner, the second period may be an integer multiple of the first period, that is, $T2_{checkboard} = p2*q2=(G*p1)*(G*q1)$, where G is an integer greater than 1. In a possible manner, G is directly proportional to the quantity of upsampling layers of the hyperprior decoding network. To be specific, a larger quantity of upsampling layers of the hyperprior decoding network indicates a larger value of G, and a smaller quantity of upsampling layers of the hyperprior decoding network indicates a smaller value of G.

For example, G=2. If the first period of checkerboard effect is 16*16, the second period of checkerboard effect is 32*32.

It should be understood that the first period and the second period may also be determined based on analysis of the first predicted image output by the image processing network. This is not limited in this application.

S505: Divide the first training image into M first image blocks based on the first period and the second period, where the M first image blocks include M1 third image blocks and M2 fourth image blocks, a size of the third image block is related to the first period, and a size of the fourth image block is related to the second period.

For example, the first training image may be divided into the M1 third image blocks based on the first period, and the first training image may be divided into the M2 fourth image blocks based on the second period. For a specific division manner, refer to the foregoing descriptions of S405. Details are not described herein again. Herein, M1 and M2 are positive integers, and M1+M2=M.

S506: Divide the first predicted image into M second image blocks based on the first period and the second period, where the M second image blocks include M1 fifth image blocks and M2 sixth image blocks, a size of the fifth image block is related to the first period, and a size of the sixth image block is related to the second period.

For example, the first predicted image may be divided into the M1 fifth image blocks based on the first period, and the first predicted image may be divided into the M2 sixth image blocks based on the second period. For a specific division manner, refer to the foregoing descriptions of S405. Details are not described herein again.

S507: Determine a fifth loss based on the M1 third image blocks and the M1 fifth image blocks.

For example, for S507, refer to the descriptions of S406 to S408. Details are not described herein again.

S508: Determine a sixth loss based on the M2 fourth image blocks and the M2 sixth image blocks.

For example, for S508, refer to the descriptions of S406 to S408. Details are not described herein again.

S509: Determine a third loss based on discrimination results obtained by a discrimination network for the first training image and the first predicted image, where the third loss is a loss of a generative adversarial network GAN.

S510: Determine a fourth loss, where the fourth loss includes at least one of the following: an L1 loss, a bit rate loss, a perceptual loss, and an edge loss.

S511: Train a pre-trained image processing network based on the fifth loss, the sixth loss, the third loss, and the fourth loss.

For example, a final loss $L_{fg}$ used for training the image processing network may be calculated by using Formula (11) below:

$$L_{fg} = L_{rate} + \alpha * L_1 + \beta * \left(L_{percep} + \gamma L_{GAN}\right) + \delta * L_{edge} + \eta\left(L1_{pc} + \varepsilon L2_{pc}\right) \quad (11)$$

Herein, $L1_{pc}$ represents the fifth loss, and $\eta$ is a weight coefficient of $L1_{pc}$. $L2_{pc}$ represents the sixth loss, and $\eta*\varepsilon$ is a weight coefficient of $L2_{pc}$.

In a possible manner, $\eta$ is greater than $\eta*\varepsilon$, that is, a weight coefficient corresponding to the fifth loss is greater than a weight coefficient corresponding to the sixth loss.

In a possible manner, $\eta$ is less than $\eta*\varepsilon$, that is, a weight coefficient corresponding to the fifth loss is less than a weight coefficient corresponding to the sixth loss.

In a possible manner, $\eta$ is equal to $\eta*\varepsilon$, that is, a weight coefficient corresponding to the fifth loss is equal to a weight coefficient corresponding to the sixth loss.

For details about S509 to S511, refer to the foregoing descriptions of S409 to S411. Details are not described herein again.

It should be understood that the period of the checkerboard effect may further include more periods different from the first period and the second period. For example, the period of the checkerboard effect includes k periods (the k periods may be respectively the first period, the second period, ..., and a kth period, where k is an integer greater than 2). In this way, the first training image may be divided into the M first image blocks based on the first period, the second period, ..., and the kth period. The M first image blocks may include M1 image blocks 11, M2 image blocks 12, ..., and Mk image blocks 1k. A size of the image block 11 is related to the first period, a size of the image block 12 is related to the second period, ..., and a size of the image block 1k is related to the k<sup>th</sup> period, where M1+M2+...+Mk=M. The first predicted image may be divided into the M second image blocks based on the first period, the second period, ..., and the k<sup>th</sup> period. The M second image blocks may include M1 image blocks 21, M2 image blocks 22, ..., and Mk image blocks 2k. A size of the image block 21 is related to the first period, a size of the image block 22 is related to the second period, ..., and a size of the image block 2k is related to the k<sup>th</sup> period. Then, a loss (loss) 1 may be determined based on the M1 image blocks 11 and the M1 image blocks 21, a loss 2 may be determined based on the M2 image blocks 12 and the M2 image blocks 22, ..., and a loss k may be determined based on the Mk image blocks 1k and the Mk image blocks 2k. Afterward, a pre-trained encoding network and a pre-trained decoding network may be trained based on the loss 1, the loss 2, ..., and the loss k.

The following describes encoding and decoding processes based on an image processing module (including an encoding network, a decoding network, a hyperprior encoding network, and a hyperprior decoding network) obtained through training.

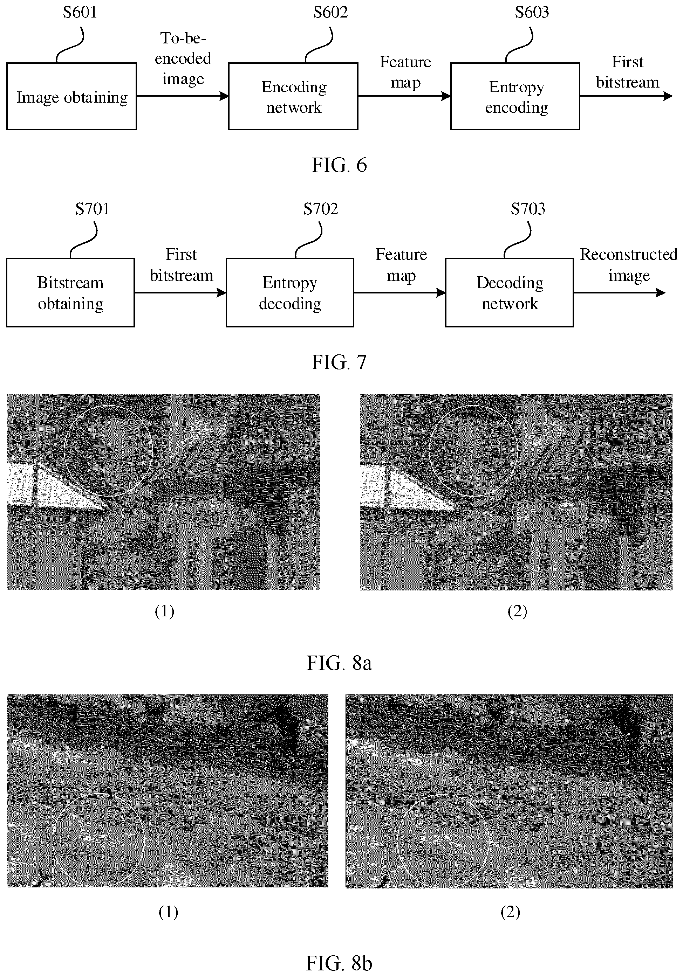

FIG. 6 is a diagram of an example of an encoding process. In the embodiment of FIG. 6, the encoding network, the hyperprior encoding network, and the hyperprior decoding network are obtained by using the foregoing training method.

S601: Obtain a to-be-encoded image.

S602: Input the to-be-encoded image to the encoding network. The encoding network processes the to-be-encoded image to obtain a feature map output by the encoding network.

For example, that the encoding network processes the to-be-encoded image may indicate that the encoding network transforms the to-be-encoded image.

S603: Perform entropy encoding on the feature map to obtain a first bitstream.

With reference to FIG. 3a, for example, the to-be-encoded image may be input to the encoding network, and the encoding network transforms the to-be-encoded image and outputs a feature map 1 to the quantization module A1. Then, the quantization module A1 may quantize the feature map 1 to obtain a feature map 2. Afterward, the quantization module A1 may input the feature map 2 to the hyperprior encoding network, and the hyperprior encoding network performs hyperprior encoding on the feature map 2 to output a hyperprior feature. Then, the hyperprior feature may be input to the quantization module A2. The quantization module A2 quantizes the hyperprior feature and inputs a quantized hyperprior feature to the entropy encoding module A2, and the entropy encoding module A2 performs entropy encoding on the quantized hyperprior feature to obtain a second bitstream (corresponding to the bitstream 2 in FIG. 3a). Afterward, the second bitstream may be input to the entropy decoding module A2 for entropy decoding, to obtain a quantized hyperprior feature, and the quantized hyperprior feature is input to the hyperprior decoding network. Then, the hyperprior decoding network may perform hyperprior decoding on the quantized hyperprior feature, and output probability distribution to the entropy estimation module. The entropy estimation module performs entropy estimation based on the probability distribution, and outputs entropy estimation information of a feature point included in the feature map 2 to the entropy encoding module. The quantization module A1 may input the feature map 2 to the entropy encoding module A1, and the entropy encoding module A1 performs, based on the entropy estimation information of the feature point included in the feature map 2, entropy encoding on the feature point included in the feature map 2, to obtain a first bitstream (corresponding to the bitstream 1 in FIG. 3a).

For example, after the hyperprior feature output by the hyperprior encoding network is obtained, entropy encoding may be performed on the hyperprior feature to obtain the second bitstream.

In a possible manner, the first bitstream and the second bitstream may be stored. In a possible manner, the first bitstream and the second bitstream may be sent to a decoder.

It should be noted that the first bitstream and the second bitstream may be packaged into one bitstream for storage/transmission; or certainly, the first bitstream and the second bitstream may be stored/transmitted as two bitstreams. This is not limited in this application.

An embodiment of this application further provides a bitstream distribution system. The bitstream distribution system includes: at least one storage medium, configured to store at least one bitstream, where the at least one bitstream is generated based on the foregoing encoding method; and a streaming media device, configured to: obtain a target bitstream from the at least one storage medium, and send the target bitstream to a terminal-side device, where the streaming media device includes a content server or a content delivery server.

FIG. 7 is a diagram of an example of a decoding process. The decoding process in FIG. 7 corresponds to the encoding process in FIG. 6. In the embodiment of FIG. 7, a decoding network and a hyperprior decoding network are obtained by using the foregoing training method.

S701: Obtain a first bitstream, where the first bitstream is a bitstream of a feature map.

S702: Perform entropy decoding on the first bitstream to obtain the feature map.

S703: Input the feature map to the decoding network. The decoding network processes the feature map to obtain a reconstructed image output by the decoding network.

With reference to FIG. 3a, for example, the decoder may receive the first bitstream and a second bitstream. The entropy decoding module A2 may first perform entropy decoding on the second bitstream to obtain a quantized hyperprior feature. Then, the hyperprior feature is input to the hyperprior decoding network, and the hyperprior decoding network processes the quantized hyperprior feature to obtain probability distribution. Then, the probability distribution may be input to the entropy estimation module. The entropy estimation module determines, based on the probability distribution, entropy estimation information of a to-be-decoded feature point in the feature map (that is, the feature map 2), and inputs the entropy estimation information of the to-be-decoded feature point in the feature map to the entropy decoding module A1. Afterward, the entropy decoding module A1 may perform entropy decoding on the first bitstream based on the entropy estimation information of the to-be-decoded feature point in the feature map, to obtain the feature map. Subsequently, the feature map may be input to the decoding network. The decoding network transforms the feature map to obtain the reconstructed image.

FIG. 8a is a diagram of an example of an image quality comparison result.

With reference to (1) in FIG. 8a, (1) in FIG. 8a is a reconstructed image obtained through encoding an image 1 by using an encoding network trained based on a training method in the conventional technologies to obtain a bitstream 1 (for a specific encoding process, refer to the descriptions in the embodiment of FIG. 6), and decoding the bitstream 1 by using a decoding network trained based on a training method in the conventional technologies (for a specific decoding process, refer to descriptions in the embodiment of FIG. 7). A bit rate of the bitstream 1 is 0.406 Bpp.

With reference to (2) in FIG. 8a, (2) in FIG. 8a is a reconstructed image obtained through encoding an image 1 by using an encoding network trained based on a training method in this application to obtain a bitstream 2 (for a specific encoding process, refer to the descriptions in the embodiment of FIG. 6), and decoding the bitstream 2 by using a decoding network trained based on a training method in this application (for a specific decoding process, refer to descriptions in the embodiment of FIG. 7). A bit rate of the bitstream 2 is 0.289 Bpp.

When (1) in FIG. 8a is compared with (2) in FIG. 8a, checkerboard effect appears in a white circle in (1) in FIG. 8a, and checkerboard effect does not appear in a white circle in (2) in FIG. 8a. It can be learned that, compared with the conventional technologies, a bit rate point at which the checkerboard effect appears is lower in an image obtained through processing performed by using the image processing network trained according to the training method in this application.

FIG. 8b is a diagram of an example of an image quality comparison result.

With reference to (1) in FIG. 8b, (1) in FIG. 8b is a reconstructed image obtained through encoding an image 1 by using an encoding network trained based on a training method in the conventional technologies to obtain a bitstream 1 (for a specific encoding process, refer to the descriptions in the embodiment of FIG. 6), and decoding the bitstream 1 by using a decoding network trained based on a training method in the conventional technologies (for a specific decoding process, refer to descriptions in the embodiment of FIG. 7). A bit rate of the bitstream 1 is 0.353 Bpp.

With reference to (2) in FIG. 8b, (2) in FIG. 8b is a reconstructed image obtained through encoding an image 1 by using an encoding network trained based on a training method in this application to obtain a bitstream 2 (for a specific encoding process, refer to the descriptions in the embodiment of FIG. 6), and decoding the bitstream 2 by using a decoding network trained based on a training method in this application (for a specific decoding process, refer to descriptions in the embodiment of FIG. 7). A bit rate of the bitstream 2 is 0.351 Bpp.

Bit rates of the bitstream 1 and the bitstream 2 are approximately equal. However, when (1) in FIG. 8a is compared with (2) in FIG. 8a, checkerboard effect appears in a white circle in (1) in FIG. 8a, and checkerboard effect does not appear in a white circle in (2) in FIG. 8a. It can be learned that, in a case of a relatively low bit rate, the checkerboard effect in the image obtained through processing performed by using the image processing network trained according to the training method in this application can be eliminated to some extent.

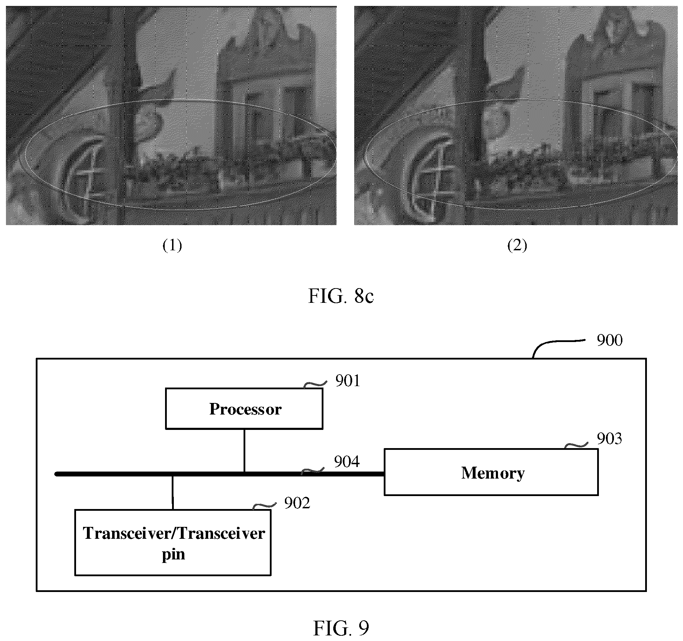

FIG. 8c is a diagram of an example of an image quality comparison result.

With reference to (1) in FIG. 8c, (1) in FIG. 8c is a reconstructed image obtained through encoding an image 1 by using an encoding network trained based on a training method in the conventional technologies to obtain a bitstream 1 (for a specific encoding process, refer to the descriptions in the embodiment of FIG. 6), and decoding the bitstream 1 by using a decoding network trained based on a training method in the conventional technologies (for a specific decoding process, refer to descriptions in the embodiment of FIG. 7). A bit rate of the bitstream 1 is a medium bit rate (for example, may be between 0.15 Bpp and 0.3 Bpp, and may be specifically set according to a requirement).

With reference to (2) in FIG. 8c, (2) in FIG. 8c is a reconstructed image obtained through encoding an image 1 by using an encoding network trained based on a training method in this application to obtain a bitstream 2 (for a specific encoding process, refer to the descriptions in the embodiment of FIG. 6), and decoding the bitstream 2 by using a decoding network trained based on a training method in this application (for a specific decoding process, refer to descriptions in the embodiment of FIG. 7). A bit rate of the bitstream 2 is a medium bit rate.

Bit rates of the bitstream 1 and the bitstream 2 are both medium bit rates. No checkerboard effect appears in (1) in FIG. 8c and (2) in FIG. 8c. However, when an area framed by an ellipse in (1) in FIG. 8c is compared with an area framed by an ellipse in (2) in FIG. 8c, the area framed by the ellipse in (2) in FIG. 8a has more details than the area framed by the ellipse in (1) in FIG. 8a. It can be learned that, in a case of a medium bit rate, an image obtained through encoding and decoding performed by using the image processing network trained according to the training method in this application has higher quality.

In an example, FIG. 9 is a block diagram of an apparatus 900 according to an embodiment of this application. The apparatus 900 may include a processor 901 and a transceiver/transceiver pin 902, and optionally, further include a memory 903.

Components of the apparatus 900 are coupled together through a bus 904. In addition to a data bus, the bus 904 further includes a power bus, a control bus, and a status signal bus. However, for clear description, various buses are referred to as the bus 904 in the figure.

Optionally, the memory 903 may be configured to store instructions in the foregoing method embodiments. The processor 901 may be configured to execute the instructions in the memory 903, control a receiving pin to receive a signal, and control a sending pin to send a signal.

The apparatus 900 may be the electronic device or a chip of the electronic device in the foregoing method embodiments.

All related content of the steps in the foregoing method embodiments may be cited in function descriptions of the corresponding functional modules. Details are not described herein again.

An embodiment further provides a computer-readable storage medium. The computer-readable storage medium stores program instructions. When the program instructions are run on an electronic device, the electronic device is enabled to perform the foregoing related method steps to implement the method in the foregoing embodiments.

An embodiment further provides a computer program product. When the computer program product runs on a computer, the computer is enabled to perform the foregoing related steps, to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. A method for training an image processing network, wherein the method comprises:

    obtaining a first training image and a first predicted image, and obtaining a period of checkerboard effect, wherein the first predicted image is generated by performing image processing on the first training image based on the image processing network;
    dividing the first training image into M first image blocks, and dividing the first predicted image into M second image blocks, based on the period, wherein both a size of the first image block and a size of the second image block are related to the period, and M is an integer greater than 1;
    determining a first loss based on the M first image blocks and the M second image blocks; and
    training the image processing network based on the first loss.

2. The method according to claim 1, wherein the determining a first loss based on the M first image blocks and the M second image blocks comprises:

    obtaining a first feature block based on the M first image blocks, wherein a characteristic value in the first feature block is obtained through calculation based on pixels at corresponding locations in the M first image blocks;
    obtaining a second feature block based on the M second image blocks, wherein a characteristic value in the second feature block is obtained through calculation based on pixels at corresponding locations in the M second image blocks; and
    determining the first loss based on the first feature block and the second feature block.

3. The method according to claim 2, wherein
   the obtaining a first feature block based on the M first image blocks comprises:

    obtaining the first feature block based on N first image blocks in the M first image blocks, wherein the characteristic value in the first feature block is obtained through calculation based on pixels at corresponding locations in the N first image blocks; and

the obtaining a second feature block based on the M second image blocks comprises:
obtaining the second feature block based on N second image blocks in the M second image blocks, wherein the characteristic value in the second feature block is obtained through calculation based on pixels at corresponding locations in the N second image blocks.

4. The method according to claim 2, wherein
the obtaining a first feature block based on the M first image blocks comprises:

performing calculation based on first target pixels at corresponding first locations in all first image blocks in the M first image blocks, to obtain a characteristic value of a corresponding first location in the first feature block, wherein a quantity of first target pixels is less than or equal to a total quantity of pixels comprised in the first image block, and one characteristic value is correspondingly obtained for first target pixels at same first locations in the M first image blocks; and
the obtaining a second feature block based on the M second image blocks comprises:
performing calculation based on second target pixels at corresponding second locations in all second image blocks in the M second image blocks, to obtain a characteristic value of a corresponding second location in the second feature block, wherein a quantity of second target pixels is less than or equal to a total quantity of pixels comprised in the second image block, and one characteristic value is correspondingly obtained for second target pixels at same second locations in the M second image blocks.

5. The method according to claim 2, wherein
the obtaining a first feature block based on the M first image blocks comprises:

determining a characteristic value of a corresponding location in the first feature block based on an average value of pixels at corresponding locations in all first image blocks in the M first image blocks, wherein one characteristic value is correspondingly obtained for an average value of pixels at same locations in the M first image blocks; and
the obtaining a second feature block based on the M second image blocks comprises:
determining a characteristic value of a corresponding location in the second feature block based on an average value of pixels at corresponding locations in all second image blocks in the M second image blocks, wherein one characteristic value is correspondingly obtained for an average value of pixels at same locations in the M second image blocks.

6. The method according to any one of claims 2 to 5, wherein the determining the first loss based on the first feature block and the second feature block comprises:

determining the first loss based on a point-to-point loss between the first feature block and the second feature block, wherein
the point-to-point loss comprises: an L1 distance, an L2 distance, or an L-Inf distance.

7. The method according to any one of claims 2 to 5, wherein the determining the first loss based on the first feature block and the second feature block comprises:

determining the first loss based on a feature-based loss between the first feature block and the second feature block, wherein
the feature-based loss comprises a structural similarity SSIM, a multi-scale structural similarity MSSSIM, or a learned perceptual image patch similarity LPIPS.

8. The method according to any one of claims 1 to 7, wherein the image processing network comprises an encoding network and a decoding network, and before the obtaining a first training image and a first predicted image, the method further comprises:

obtaining a second training image and a second predicted image, wherein the second predicted image is obtained through encoding the second training image based on an untrained encoding network and then decoding an encoding result of the second training image based on an untrained decoding network;
determining a second loss based on the second predicted image and the second training image; and
pre-training the untrained encoding network and the untrained decoding network based on the second loss.

9. The method according to claim 8, wherein the first predicted image is obtained through encoding the first training image based on a pre-trained encoding network and then decoding an encoding result of the first training image based on a pre-trained decoding network; and
the training the image processing network based on the first loss comprises:

determining a third loss based on discrimination results obtained by a discrimination network for the first training image and the first predicted image, wherein the third loss is a loss of a generative adversarial network GAN, and the GAN network comprises the discrimination network and the decoding network; and
training the pre-trained encoding network and the pre-trained decoding network based on the first loss and the third loss.

10. The method according to claim 9, wherein the training the image processing network based on the first loss further comprises:

determining a fourth loss, wherein the fourth loss comprises at least one of the following: an L1 loss, a bit rate loss, a perceptual loss, and an edge loss; and
the training the pre-trained encoding network and the pre-trained decoding network based on the first loss and the third loss comprises:
training the pre-trained encoding network and the pre-trained decoding network based on the first loss, the third loss, and the fourth loss.

11. The method according to claim 10, wherein

the image processing network further comprises a hyperprior encoding network and a hyperprior decoding network, and the hyperprior decoding network and the decoding network each comprise an upsampling layer; and
the period comprises a first period and a second period, wherein the first period is determined based on a quantity of upsampling layers in the decoding network, the second period is determined based on the first period and a quantity of upsampling layers in the hyperprior decoding network, and the second period is greater than the first period.

12. The method according to claim 11, wherein the dividing the first training image into M first image blocks, and dividing the first predicted image into M second image blocks, based on the period comprises:

dividing the first training image into the M first image blocks based on the first period and the second period, wherein the M first image blocks comprise M1 third image blocks and M2 fourth image blocks, a size of the third image block is related to the first period, a size of the fourth image block is related to the second period, M1 and M2 are positive integers, and M1+M2=M; and
dividing the first predicted image into the M second image blocks based on the first period and the second period, wherein the M second image blocks comprise M1 fifth image blocks and M2 sixth image blocks, a size of the fifth image block is related to the first period, and a size of the sixth image block is related to the second period; and
when the first loss comprises a fifth loss and a sixth loss, the determining a first loss based on the M first image blocks and the M second image blocks comprises:

determining the fifth loss based on the M1 third image blocks and the M1 fifth image blocks; and
determining the sixth loss based on the M2 fourth image blocks and the M2 sixth image blocks.

13. The method according to claim 12, wherein the training the image processing network based on the first loss comprises:

performing weighting calculation on the fifth loss and the sixth loss to obtain a seventh loss; and
training the pre-trained encoding network and the pre-trained decoding network based on the seventh loss.

14. An encoding method, wherein the method comprises:

obtaining a to-be-encoded image;
inputting the to-be-encoded image to an encoding network, and processing, by the encoding network, the to-be-encoded image to obtain a feature map output by the encoding network, wherein the encoding network is obtained through training by using the method according to any one of claims 8 to 13; and
performing entropy encoding on the feature map to obtain a first bitstream.

**15.** The method according to claim 14, wherein the performing entropy encoding on the feature map to obtain a first bitstream comprises:

inputting the feature map to a hyperprior encoding network, and processing, by the hyperprior encoding network, the feature map to obtain a hyperprior feature;
inputting the hyperprior feature to a hyperprior decoding network, and processing, by the hyperprior decoding network, the hyperprior feature and then outputting probability distribution, wherein both the hyperprior encoding network and the hyperprior decoding network are obtained through training by using the method according to any one of claims 9 to 13; and
performing entropy encoding on the feature map based on the probability distribution to obtain the first bitstream.

**16.** The method according to claim 15, wherein the method further comprises:
performing entropy encoding on the hyperprior feature to obtain a second bitstream.

**17.** A decoding method, wherein the method comprises:

obtaining a first bitstream, wherein the first bitstream is a bitstream of a feature map;
performing entropy decoding on the first bitstream to obtain the feature map; and
inputting the feature map to a decoding network, and processing, by the decoding network, the feature map to obtain a reconstructed image output by the decoding network, wherein the decoding network is obtained through training by using the method according to any one of claims 8 to 13.

**18.** The method according to claim 17, wherein the method further comprises:

obtaining a second bitstream, wherein the second bitstream is a bitstream of a hyperprior feature; and
the performing entropy decoding on the bitstream to obtain the feature map comprises:

performing entropy decoding on the second bitstream to obtain the hyperprior feature;
inputting the hyperprior feature to a hyperprior decoding network, and processing, by the hyperprior decoding network, the hyperprior feature to obtain probability distribution, wherein the hyperprior decoding network is obtained through training by using the method according to any one of claims 9 to 13; and
performing entropy decoding on the first bitstream based on the probability distribution to obtain the feature map.

**19.** An electronic device, comprising:

a memory and a processor, wherein the memory is coupled to the processor, wherein
the memory stores program instructions, and when the program instructions are executed by the processor, the electronic device is enabled to perform the training method according to any one of claims 1 to 13.

**20.** A chip, comprising one or more interface circuits and one or more processors, wherein the interface circuit is configured to receive a signal from a memory of an electronic device, and send the signal to the processor, the signal comprises computer instructions stored in the memory, and when the processor executes the computer instructions, the electronic device is enabled to perform the training method according to any one of claims 1 to 13.

**21.** A computer-readable storage medium, wherein the computer-readable storage medium stores a computer program, and when the computer program is run on a computer or a processor, the computer or the processor is enabled to perform the training method according to any one of claims 1 to 13.

**22.** A computer program product, wherein the computer program product comprises a software program, and when the software program is executed by a computer or a processor, steps of the method according to any one of claims 1 to 13 are performed.

**23.** A bitstream storage apparatus, wherein the apparatus comprises a receiver and at least one storage medium;

the receiver is configured to receive a bitstream;
the at least one storage medium is configured to store the bitstream; and
the bitstream is generated according to the encoding method according to any one of claims 14 to 16.

24. A bitstream transmission apparatus, wherein the apparatus comprises a transmitter and at least one storage medium;

the at least one storage medium is configured to store a bitstream, wherein the bitstream is generated according to the encoding method according to any one of claims 14 to 16; and
the transmitter is configured to: obtain the bitstream from the storage medium, and send the bitstream to a terminal-side device by using a transmission medium.

25. A bitstream delivery system, wherein the system comprises:

the at least one storage medium, configured to store at least one bitstream, wherein the at least one bitstream is generated according to the encoding method according to any one of claims 14 to 16; and
a streaming media device, configured to obtain a target bitstream from the at least one storage medium, and send the target bitstream to a terminal-side device, wherein the streaming media device comprises a content server or a content delivery server.

FIG. 1a

Image 1
(low resolution) → Image super-resolution network → Image 2
(high resolution)

Loss

FIG. 1b

Image 1
(partially blurred) → Image restoration network → Image 2

Loss

FIG. 1c

FIG. 1d

(1)                                          (2)

FIG. 1e

FIG. 2a

| a | 0 | b | 0 | c | 0 | d | 0 | e | Input | (∗) | w1 | w2 | w3 | Convolution kernel |

Output: x1 y1 x2 y2 x3 y3

$x1 = w2 \times b$
$y1 = w1 \times b + w3 \times c$

FIG. 2b

```
┌─────────────────┐          ┌──────────────┐     ┌──────────────┐     ┌──────────────┐
│                 │          │ Quantization │     │  Hyperprior  │     │ Quantization │
│ Encoding network│─────────▶│  module A1   │────▶│   encoding   │────▶│  module A2   │
│                 │          │              │     │   network    │     │              │
└─────────────────┘          └──────┬───────┘     └──────────────┘     └──────┬───────┘
                                    │                                          │
                                    ▼                                          ▼
                             ┌──────────────┐                          ┌──────────────┐
                             │   Entropy    │◀────┐                     │   Entropy    │
                             │ encoding     │     │                     │ encoding     │
                             │ module A1    │     │                     │ module A2    │
                             └──────┬───────┘     │                     └──────┬───────┘
                                    │             │                            │
                                    ▼             │                            ▼
              Bitstream 1    ▓▓□□▓▓□□▓▓□   ┌──────┴────┐   Bitstream 2   ▓▓□□▓▓□□▓▓□
                                    │       │  Entropy  │                       │
                                    │       │estimation │◀──────────────┐       │
                                    ▼       │  module   │               │       ▼
                             ┌──────────────┐└────┬──────┘              │┌──────────────┐
┌─────────────────┐          │   Entropy    │◀────┘                     ││   Entropy    │
│                 │◀─────────│ decoding     │                          ││ decoding     │
│Decoding network │          │ module A1    │                          ││ module A2    │
│                 │          └──────────────┘                          │└──────┬───────┘
└─────────────────┘                                                    │       │
                                                                       │       ▼
                                                                       │┌──────────────┐
                                                                       ││  Hyperprior  │
                                                                       └┤   decoding   │
                                                                        │   network    │
                                                                        └──────────────┘
```

FIG. 3a

EP 4 564 230 A1

FIG. 3b

FIG. 3c(1)

Discrimination
network

| Convolutional layer E9 |
| Convolutional layer E8 |
| Convolutional layer E7 |
| Convolutional layer E6 |
| Convolutional layer E5 |
| Convolutional layer E4 |
| Convolutional layer E3 |
| Convolutional layer E2 |
| Convolutional layer E1 |

FIG. 3c(2)

S401
Obtain pre-training information

Second training image →
Second predicted image →

S402
Determine a second loss

Second loss →

S403
Pre-train

Untrained image processing network →

Pre-trained image processing network →

S404
Obtain training information

First training image →
Period of checkerboard effect →
First predicted image →

S405
Chunk
Divide a training image into blocks
Divide a predicted image into blocks

M first image blocks →
M second image blocks →

S406
Generate a feature block

S407
Generate a feature block

First feature block →
Second feature block →

S408
Determine a first loss

First loss →

Discrimination network →

S409
Determine a third loss

Third loss →

S410
Determine a fourth loss

Fourth loss →

S411
Train

FIG. 4a

First image block

Second image block

First training image

First predicted image

(1)

(2)

FIG. 4b

First image block

First training image

$e_{11}$

$e_{21}$

$e_{31}$

$e_{M1}$

B1

B2

B3

...

...

...

BM

...

F1

First feature block

FIG. 4c

FIG. 5

FIG. 6

FIG. 7

(1)                                                    (2)

FIG. 8a

(1)                                                    (2)

FIG. 8b

(1)                                                    (2)

FIG. 8c

FIG. 9

# INTERNATIONAL SEARCH REPORT

| International application No. |
|---|
| **PCT/CN2023/095130** |

| **A.** | **CLASSIFICATION OF SUBJECT MATTER** |
|---|---|

G06N 3/08(2023.01)i;  G06N 3/04(2023.01)i;  G06T 9/00(2006.01)i

According to International Patent Classification (IPC) or to both national classification and IPC

| **B.** | **FIELDS SEARCHED** |
|---|---|

Minimum documentation searched (classification system followed by classification symbols)

IPC: G06N, G06T

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, IEEE: 棋盘格, 棋盘, 网格, 周期, 图像, 训练, 网络, 图像块, 分块, 损失, checkerboard, period, image, block, training, network, lost

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| A | CN 107369189 A (CHENGDU UNIVERSITY OF INFORMATION TECHNOLOGY) 21 November 2017 (2017-11-21) description, paragraphs 30-42 | | 1-25 |
| A | CN 110473141 A (GUANGDONG OPPO MOBILE TELECOMMUNICATIONS CORP., LTD.) 19 November 2019 (2019-11-19) entire document | | 1-25 |
| A | CN 113469897 A (SUZHOU KEYUAN SOFTWARE TECH DEVELOPMENT CO., LTD. et al.) 01 October 2021 (2021-10-01) entire document | | 1-25 |
| A | US 2022189116 A1 (IMPERIAL COLLEGE OF SCIENCE, TECHNOLOGY AND MEDICINE) 16 June 2022 (2022-06-16) entire document | | 1-25 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 June 2023** | **23 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/095130**

| Patent document cited in search report | | | Publication date (day/month/year) | Patent family member(s) | | | Publication date (day/month/year) |
|---|---|---|---|---|---|---|---|
| CN | 107369189 | A | 21 November 2017 | None | | | |
| CN | 110473141 | A | 19 November 2019 | None | | | |
| CN | 113469897 | A | 01 October 2021 | None | | | |
| US | 2022189116 | A1 | 16 June 2022 | WO | 2021044122 | A1 | 11 March 2021 |
| | | | | GB | 2586869 | A | 10 March 2021 |
| | | | | JP | 2022547288 | A | 11 November 2022 |
| | | | | KR | 20220062324 | A | 16 May 2022 |

Form PCT/ISA/210 (patent family annex) (July 2022)

REFERENCES CITED IN THE DESCRIPTION

**Patent documents cited in the description**

- CN 202210945704